(19) Europäisches Patentamt / European Patent Office / Office européen des brevets

(11) **EP 3 149 703 B1**

(12) **EUROPEAN PATENT SPECIFICATION**

(45) Date of publication and mention
of the grant of the patent:
**04.04.2018 Bulletin 2018/14**

(21) Application number: **15726952.3**

(22) Date of filing: **02.06.2015**

(51) Int Cl.:
***G06T 7/593*** *(2017.01)*

(86) International application number:
**PCT/EP2015/062231**

(87) International publication number:
**WO 2015/185538 (10.12.2015 Gazette 2015/49)**

(54) **DETERMINING QUANTITATIVE THREE-DIMENSIONAL SURFACE TOPOGRAPHY FROM TWO-DIMENSIONAL MICROSCOPY IMAGES**

BESTIMMUNG EINER QUANTITATIVEN DREIDIMENSIONALEN OBERFLÄCHENTOPOGRAFIE AUS ZWEIDIMENSIONALEN MIKROSKOPIE-BILDERN

DÉTERMINATION QUANTITATIVE DE TOPOGRAPHIE DE SURFACE TRIDIMENSIONNELLE À PARTIR DES IMAGES MICROSCOPIQUES BIDIMENSIONNELLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.06.2014 EP 14170815**

(43) Date of publication of application:
**05.04.2017 Bulletin 2017/14**

(73) Proprietor: **Rijksuniversiteit Groningen**
**9712 CP Groningen (NL)**

(72) Inventors:
- **MARTÍNEZ MARTÍNEZ, Diego**
  **NL-9747 AG Groningen (NL)**
- **OCELIK, Vaclav**
  **NL-9747 AG Groningen (NL)**
- **DE HOSSON, Josephus Theodorus Maria**
  **NL-9747 AG Groningen (NL)**
- **MANSILLA SANCHEZ, Catalina**
  **NL-9747 AG Groningen (NL)**
- **FABER, Enne Theodoor**
  **NL-9747 AG Groningen (NL)**

(74) Representative: **V.O.**
**P.O. Box 87930**
**Carnegieplein 5**
**2508 DH Den Haag (NL)**

(56) References cited:
- COP M ET AL: "A multiresolution approach to the 3D reconstruction of a 50S ribosome from an EM-tilt series solving the alignment problem without gold particles (electron microscopy)", PROCEEDINGS OF THE INTERNATIONAL CONFERENCE ON PATTERN RECOGNITION. ATLANTIC CITY, JUNE 16 - 21, 1990. CONFERENCE A : COMPUTER VISION AND CONFERENCE B : PATTERN RECOGNITION SYSTEMS AND APPLICATIONS; [PROCEEDINGS OF THE INTERNATIONAL CONFERENCE ON PAT, vol. i, 16 June 1990 (1990-06-16), pages 733-737, XP010020340, DOI: 10.1109/ICPR.1990.118248 ISBN: 978-0-8186-2062-1
- LAWRENCE A ET AL: "Transform-based backprojection for volume reconstruction of large format electron microscope tilt series", JOURNAL OF STRUCTURAL BIOLOGY, ACADEMIC PRESS, UNITED STATES, vol. 154, no. 2, 1 May 2006 (2006-05-01), pages 144-167, XP024905218, ISSN: 1047-8477, DOI: 10.1016/J.JSB.2005.12.012 [retrieved on 2006-05-01]

**Description**

FIELD AND BACKGROUND OF THE INVENTION

The invention relates to a method and a computer program for determining quantitative three-dimensional surface topography data from data representing images of a surface obtained by a microscope.

Upon observing a sample surface using the appropriate detection conditions, contrasting variations in tint and/or color in images are caused by the topography of the sample, also referred to as 'topographic contrast'. However, the extraction of topographical information from two-dimensional images with such topographic contrast is rather complex. Zhu et al., Exp. Mech. 51 (2011) 97 describes techniques for obtaining quantitative three-dimensional surface topography data by scanning electron microscopy (SEM) or from SEM image data. To obtain data of meaningful accuracy regarding the shape of the scanned surface in a Z-direction perpendicular to the (mutually perpendicular) X and Y dimensions of that surface, a calibration of the microscope stage movement for precisely determining movements of the scanned surface and dimensions of the chamber and of the holder of the sample of which the surface is scanned, is required. SEM and other microscopes suitable for calibration are rare and very costly and calibration is time consuming. Moreover, such calibration may introduce several additional errors in the final results (Li et al., Opt. Lasers Eng. 50 (2012) 971).

Cop et al., Proceedings of the 10th International Conference on Pattern Recognition, Volume 1, 733 - 737, 1990 discloses a multi-resolution approach to the 3D-reconstruction from electron microscope tilt series with a limited number of projections where the tilt angles are assumed to be known. It solves the alignment problem from the image data without additional gold particles in a coarse-to-fine strategy, but quantitative results of the 3D reconstruction are not demonstrated.

SUMMARY OF THE INVENTION

It is an object of the present invention to provide a solution that allows obtaining quantitative three-dimensional surface topography data from two-dimensional images obtained by a microscope without requiring a priori information about the imaging equipment and in particular without requiring a calibration of the microscope stage movement determining movements of the scanned surface and of the dimensions of the chamber to obtain three-dimensional surface topography data of meaningful accuracy. According to the invention, this object is achieved by providing a method according to claim 1.

This method allows obtaining three-dimensional surface topography data from a series of at least three images acquired from the same sample surface positioned at different angles in the microscope. By solving equations of displacements of corresponding points in two-dimensional image planes between one image and at least two other images, all acquired from the same sample surface, but acquired from that surface while it is held at different orientations relative to the optical axis, quantitative three-dimensional surface topography data can be calculated.

Corresponding points may for instance be data points each representing a corresponding pixel or facet (consisting of a cluster of pixels), in particular properties of the respective pixel or facet and parameters defining the location of the respective pixel or facet, for instance in terms of the location of the center or of a predefined corner thereof. For a particularly precise identification of the topographical features, it is preferred that variations in tint and or color in the image result from the surface topography of the sample.

The only physical requirement to obtain the 3D representation is the acquisition of at least three images of the surface region under study at different tilt angles, without further need to know details of the tilting parameters. This method can be applied to sets of images acquired or provided without knowledge of the imaging and/or rotation conditions. The method according to the invention also allows finding the precise location and orientation of the sample with respect to the optical system. In general, this technique may be used to improve other techniques present in the same measurement systems which are influenced by surface topography (for instance EDS measurements in SEM systems).

The invention can also be embodied in a method according to claim 7 that also includes capturing of the images by microscopy and in a computer program product according to claim 8 which when executed on a computer, determines quantitative three-dimensional surface topography data from data representing one image and at least two other images, all acquired from the same sample surface, but acquired from that surface while it is held at different orientations relative to the optical axis.

Particular elaborations and embodiments of the invention are set forth in the dependent claims.

Further features, effects and details of the invention appear from the detailed description and the drawings.

BRIEF DESCRIPTION OF THE DRAWINGS

Figs. 1a)-1c) are schematic illustrations of the influence of the height (level above a tilted plane) ($\Delta z$) of a point P on the observed displacement of that point from a position on an untilted sample surface when the sample surface is tilted over a tilt angle $\theta$ for:

    a) a point in the sample plane (z = 0),
    b) a point above the sample plane (z > 0), and
    c) a point below the sample plane (z < 0);

Fig. 2 is a diagram representing the physical, optical and computational relationship between situations before and after the movement, in which examples of corresponding rotation, translation and observations are shown on the right side;

Fig. 3 is an illustration showing nominal orientations of tilting axes in three examples:

    Case I: tilt about a sample stage axis only, imaging with x-axis parallel to the tilting axis,
    Case II: tilt about the sample stage axis only, imaging with x-axis rotated over 35° relative to the tilting axis, and
    Case III: tilt about the sample stage axis and about an axis perpendicular thereto, imaging with x-axis parallel to the sample stage axis;

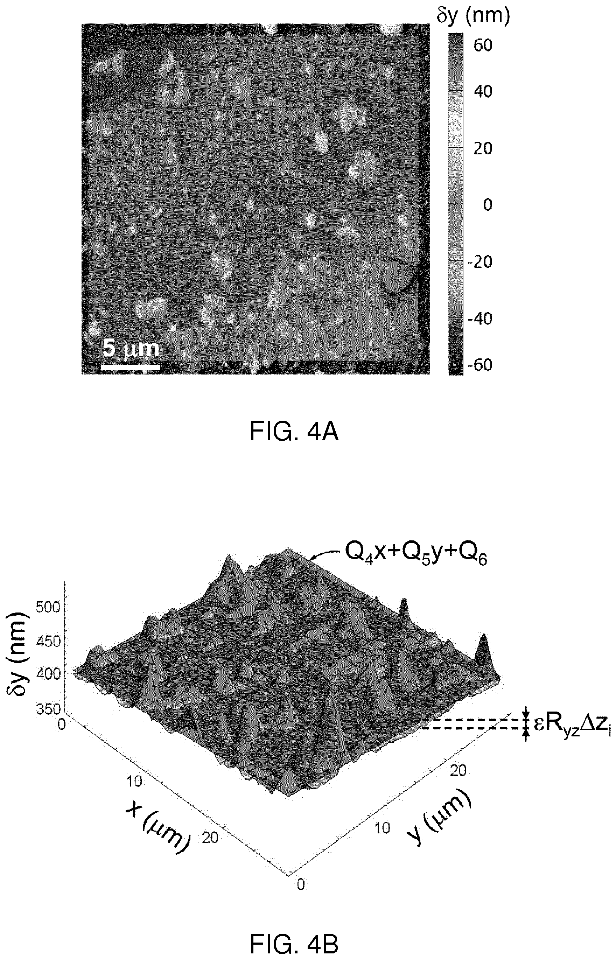

Fig. 4a) is a map of displacements in y direction ($\delta y$) obtained from digital image correlation (DIC) applied to images of Case II captured before and after tilting over an angle $\theta_{nom}$ = 4.0°;

Fig. 4b) is a map of the result of fitting of the displacements to eq. 16b (see below) for calculation of $Q_4$, $Q_5$, and $Q_6$ terms;

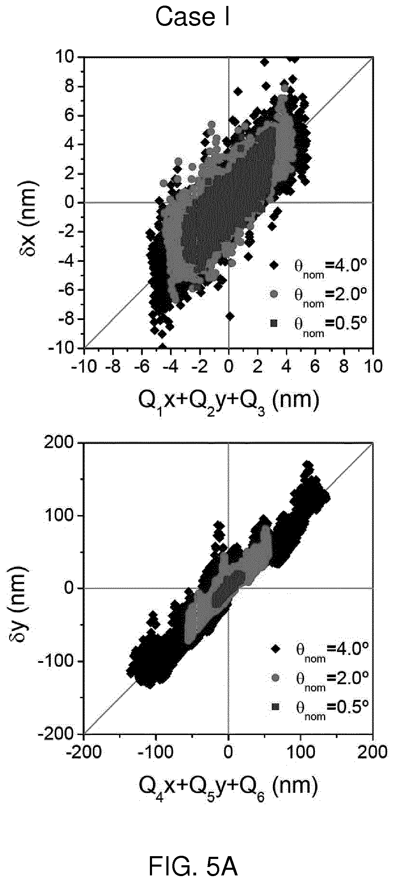

Figs. 5a), 5b) and 5c) are graphs showing the fitting of displacements in $x$ and $y$ direction to the values of {Q} (eqs. 16) for the three examples Case I, Case II and Case III, all the displacement data have been normalized for obtaining zero averages, each set of data is identified by the nominal angle of tilting;

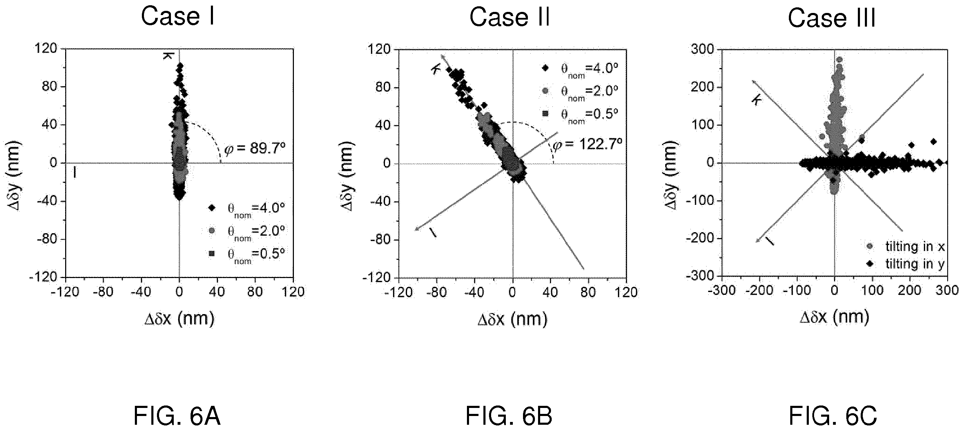

Figs. 6a) 6b) and 6c) are plots of displacements $\Delta y$ vs. $\Delta x$ for the three examples Case I, Case II and Case III (see eq. 18), each set of data is again identified by the nominal angle of tilt, the alternative ($k$, $l$) coordinate system being depicted for each Case;

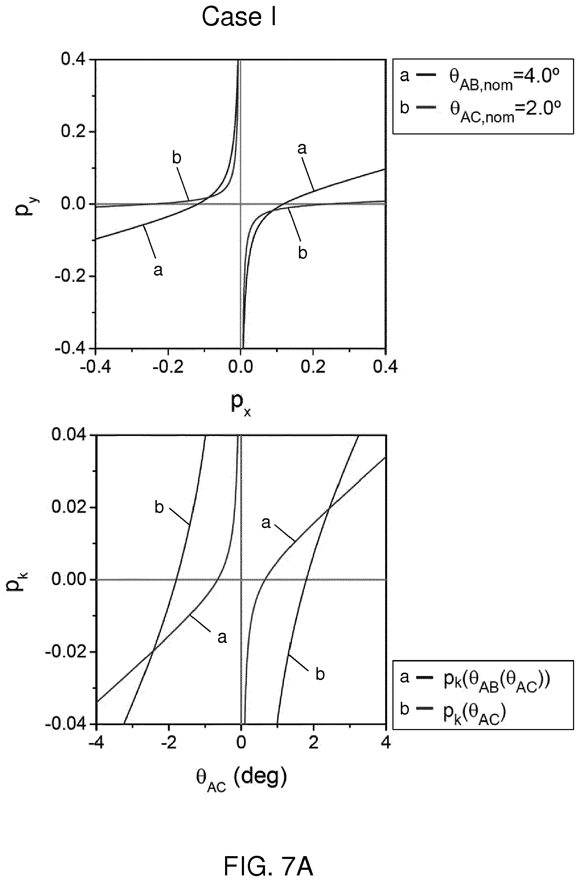

Figs. 7a), 7b) and 7c) are graphs illustrating methods for finding a unique solution for the tilting in which the upper graphs illustrate method 1 ($p_y$ vs. $p_x$ plots) and the bottom graphs illustrate method 2 ($p_k$ vs. $\theta_{AC}$);

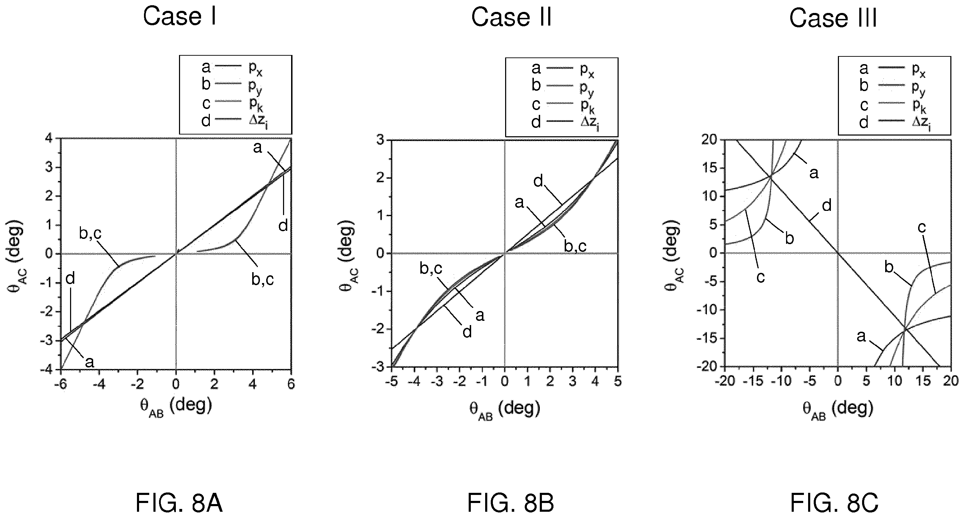

Fig. 8a), 8b), 8c) are graphs showing the outcome of comparisons between both methods of solution depicted in Figs. 7a), 7b) and 7c);

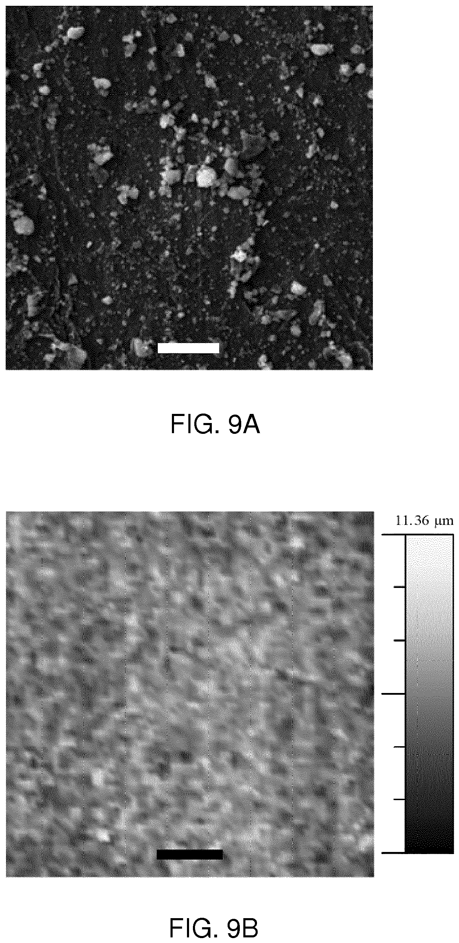

Fig. 9a)-9f) are 3D images obtained from Case I (all the scale bars representing 5 $\mu$m) in which:

    Fig. 9a) is an SEM reference picture,
    Fig. 9b) is a reconstruction image obtained using $\delta x$ data from a set acquired at $\theta_{nom}$ = 0.5°,

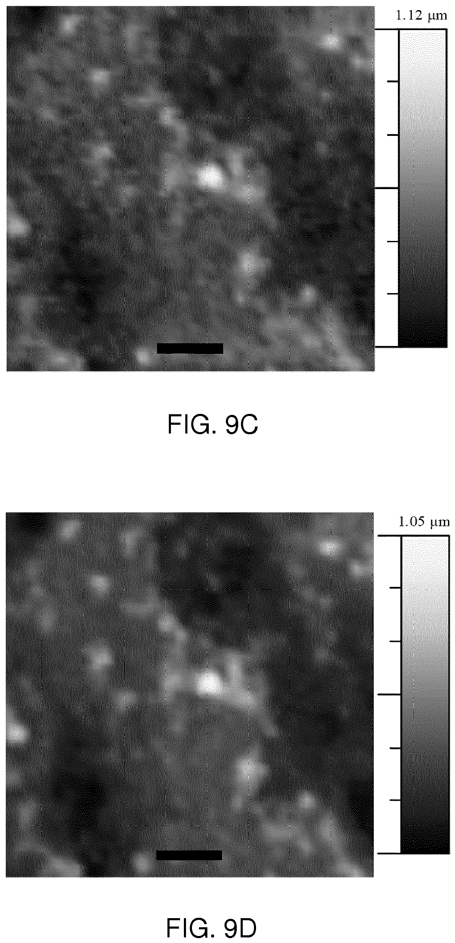

    Fig. 9c) is a reconstruction image obtained using $\delta y$ data from a set acquired at $\theta_{nom}$ = 0.5°,
    Fig. 9d) is a reconstruction image obtained using $\delta y$ data from a set acquired at $\theta_{nom}$ = 2.0°,

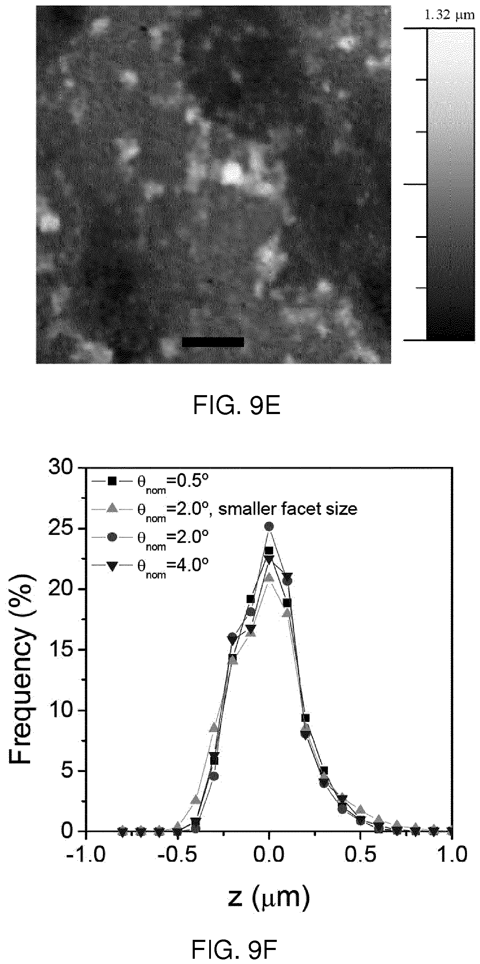

    Fig. 9e) is a reconstruction image obtained using $\delta y$ data from a set acquired at $\theta_{nom}$ = 2.0° and with smaller facet size in DIC,
    Fig. 9f) is a graph with a set of histograms of reconstructions performed at different angles and facet sizes;

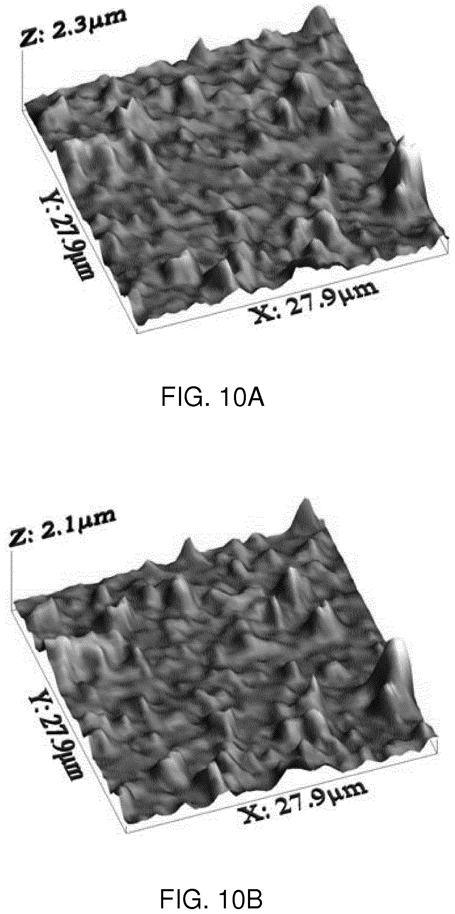

Figs. 10a)-10d) are 3D reconstructions from Case II, in which:

    Fig. 10a) is a reconstruction using $\delta x$ data from a set acquired at $\theta_{nom}$ = 2.0°,
    Fig. 10b) is a reconstruction using $\delta y$ data from a set acquired at $\theta_{nom}$ = 2.0°,

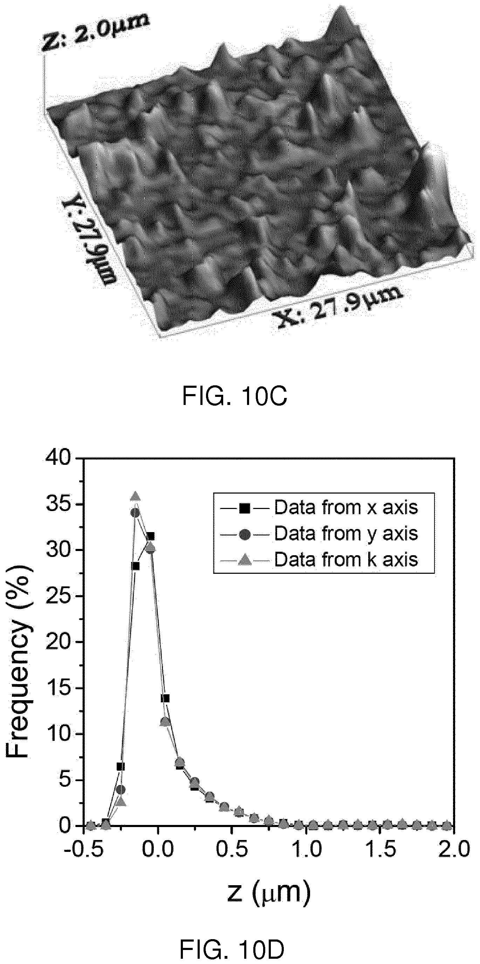

    Fig. 10c) is a reconstruction using $\delta k$ data from a set acquired at $\theta_{nom}$ = 2.0°,
    Fig. 10d) is a graph containing histograms of reconstructions using data from different axes;

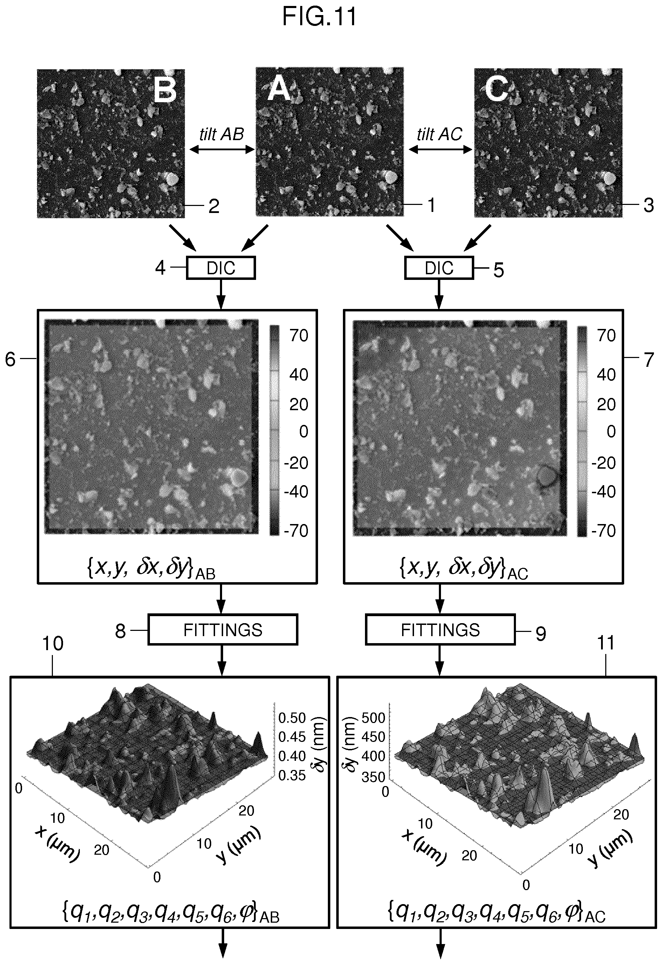

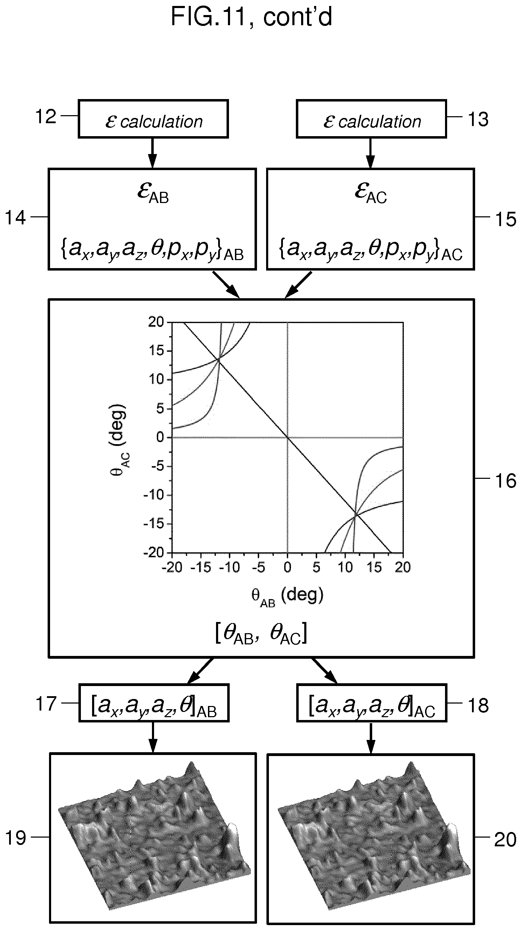

Fig. 11 is a flow chart of an architecture of an example of an algorithm for obtaining 3D maps from SEM images;

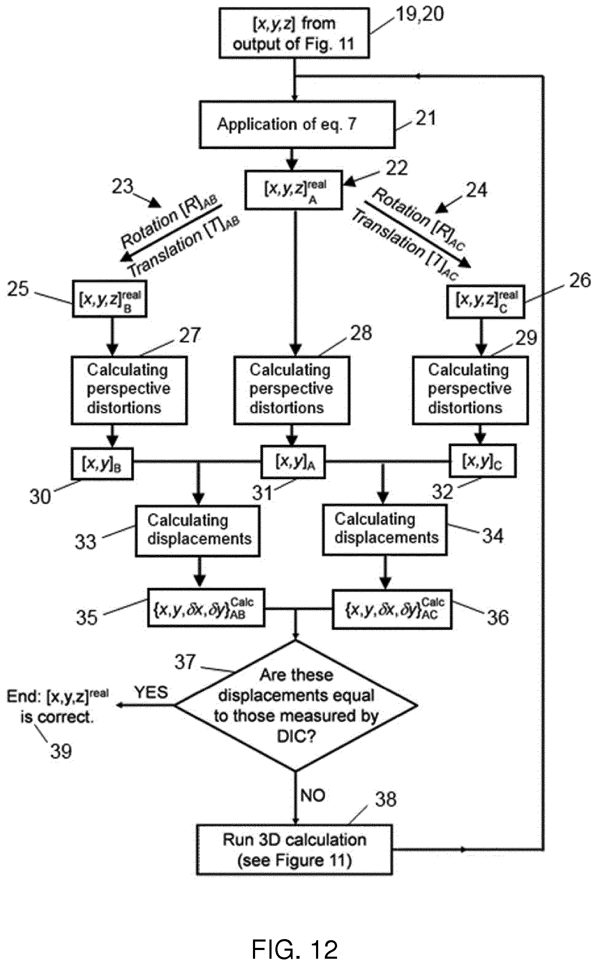

Fig. 12 is a flow chart of an example of an algorithm for correction of perspective deviations;

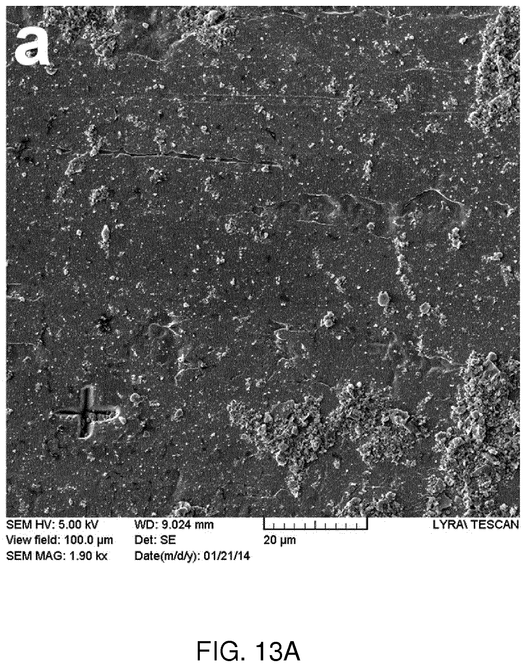

Fig. 13a) is a SEM image of a sample;

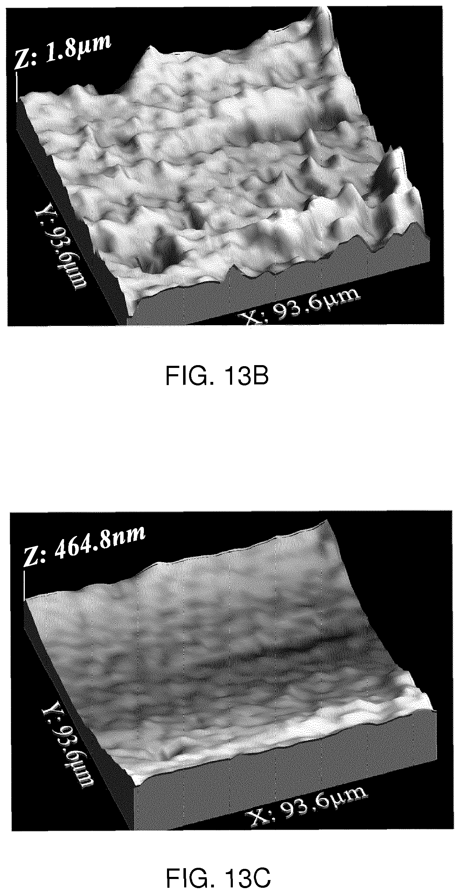

Fig. 13b) is a 3D reconstruction of the sample shown in Fig. 13a); and
Fig. 13c) is a perspective correction applied to obtain the 3D reconstruction of Fig. 13b).

DETAILED DESCRIPTION

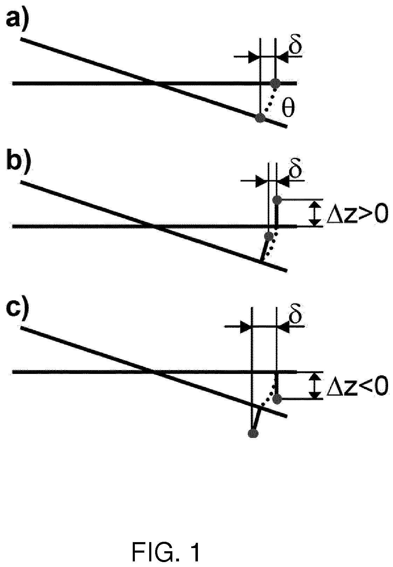

Figs. 1a)-1c) illustrate basic phenomena occurring when tilting a sample on the displacement ($\delta$) of the points

at different distances from a plane in images acquired from the sample surface at different angles. The magnitude of the displacement ($\delta$) of each point between its position in one image and its position in the other image acquired from the sample surface held at a different angle depends on the value of the $z$ coordinates of the points (cf. situations a, b and c in Fig. 1). As a consequence, from the displacements ($\delta$) between the positions of corresponding points in the images before and after tilting, the $z$ coordinates of these points can be determined. Determination of these displacements of the positions of corresponding points between different images can for instance be carried out by conventional 2D digital image correlation (DIC) (see e.g. B. Pan et al., Meas. Sci. Technol. 20 (2009) 062001) between the images before and after the tilting. In the following, it is described how data describing the three-dimensional profile can be obtained from the DIC data.

*Mathematical definitions*

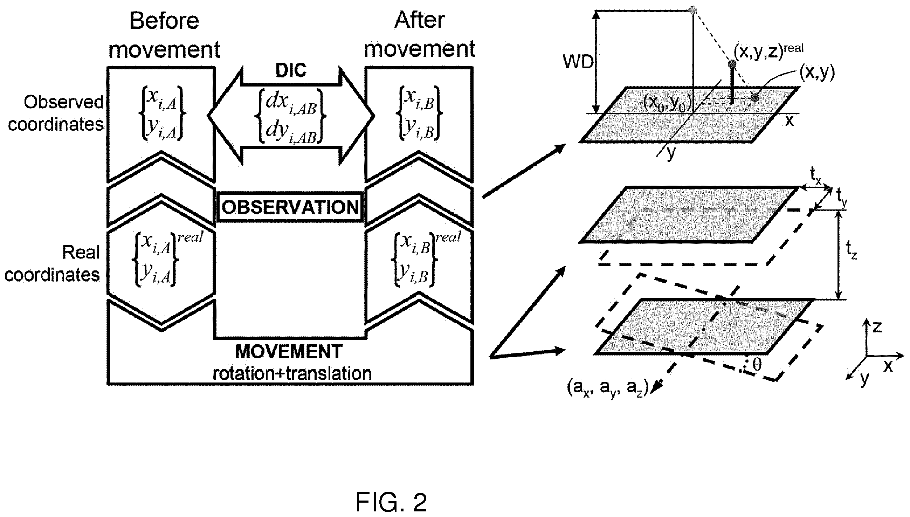

An image can be considered as a matrix of data in which each pixel is characterized by its position ($x$ and $y$ coordinates) and a grayscale intensity. For a rigid body, the modification of coordinates before and after the tilting (situations labeled A and B, respectively) can be described as a combination of rotations and translations (see Figure 2). Therefore, a point i with starting coordinates $[A]=(x_{i,A}, y_{i,A}, z_{i,A})^{real}$ is transformed to final coordinates $[B]=(x_{i,B}, y_{i,B}, z_{i,B})^{real}$, as:

$$[B] = [R][A] + [T] \tag{1}$$

where [T] is the translation matrix:

$$[T] = \begin{pmatrix} t_x \\ t_y \\ t_z \end{pmatrix} \tag{2}$$

and [R] is the rotation matrix:

$$[R] = \begin{pmatrix} R_{xx} & R_{xy} & R_{xz} \\ R_{yx} & R_{yy} & R_{yz} \\ R_{zx} & R_{zy} & R_{zz} \end{pmatrix} =$$

$$= \begin{pmatrix} \cos\theta + a_x^2(1-\cos\theta) & a_x a_y(1-\cos\theta) - a_z\sin\theta & a_x a_z(1-\cos\theta) + a_y\sin\theta \\ a_x a_y(1-\cos\theta) + a_z\sin\theta & \cos\theta + a_y^2(1-\cos\theta) & a_y a_z(1-\cos\theta) - a_x\sin\theta \\ a_x a_z(1-\cos\theta) - a_y\sin\theta & a_y a_z(1-\cos\theta) + a_x\sin\theta & \cos\theta + a_z^2(1-\cos\theta) \end{pmatrix} \tag{3}$$

$\theta$ is the angle of rotation around the vector a with components $a_x$, $a_y$, $a_z$. This vector is unitary, so:

$$a_x^2 + a_y^2 + a_z^2 = 1 \tag{4}$$

Both movements are shown in Fig. 2. Without loss of generality, the $z$ coordinate of every point $i$ can be expressed as a combination of a plane with components $p_x$, $p_y$ and $p_z$ and the height of every point relative to this plane ($\Delta z_i$), as:

$$z_{i,A}^{real} = p_x x_{i,A}^{real} + p_y y_{i,A}^{real} + p_z + \Delta z_i \tag{5}$$

Since we are working in laboratory coordinates, $\Delta z_i$ vertical shifts are only perpendicular to the plane if $p_x = p_y = 0$ (horizontal). This plane can be characterized by a vector located at the origin normal to the plane with components

$$\left\{ \frac{-p_z}{1+p_x^2+p_y^2} \left( p_x, p_y, -1 \right) \right\}.$$

Combining eqs. 1-3 and 5, the following expressions are found:

$$x_{i,B}^{real} = R_{xx} x_{i,A}^{real} + R_{xy} y_{i,A}^{real} + R_{xz} \left( p_x x_{i,A}^{real} + p_y y_{i,A}^{real} + p_z + \Delta z_i \right) + t_x \qquad (6a)$$

$$y_{i,B}^{real} = R_{yx} x_{i,A}^{real} + R_{yy} y_{i,A}^{real} + R_{yz} \left( p_x x_{i,A}^{real} + p_y y_{i,A}^{real} + p_z + \Delta z_i \right) + t_y \qquad (6b)$$

Both expressions combine the rotation and the translation of the sample before and after the movement (situations A and B, respectively).

The real coordinates of the specimen are to be determined from images taken before and after the movement (see Fig. 2). Therefore, in addition to the pure physical motion of the rigid body, there is also influence of the optics in the observed displacements. This effect is related to the distance between the sample and the optics along the optical axis, the so-called working distance (WD). As shown in Fig. 2, all points measured out-of-plane away from the center of the image $(x_0, y_0)$ show a difference between the observed coordinates $(x_i, y_i)$, and the real coordinates $(x_i, y_i)^{real}$:

$$x_i - x_0 = \left( x_i^{real} - x_0 \right) \frac{WD}{WD - \Delta z_i} \qquad (7a)$$

$$y_i - y_0 = \left( y_i^{real} - y_0 \right) \frac{WD}{WD - \Delta z_i} \qquad (7b)$$

The magnitude of this distortion does not have a substantial influence in the measurements in SEM, since the working distance is much larger than the values of $\Delta z$. In general, it is confined to the sub-pixel regime and negligibly small. However, since the present method is based on a comparison of images acquired before and after tilting the sample by small amounts, the displacements are also in the sub-pixel regime, so the optical distortion may become relevant, in particular when comparing lower magnification images (i.e. large image size) before and after tilting. In such cases, the points close to the border of the image are strongly shifted, which causes important deviations. This effect can be corrected, as will be described with reference to Fig. 12. However, in the first examples only high magnification images are processed, where this effect is negligible and no correction for optical distortion is applied. An example of the application of such a correction for optical distortion will be described with reference to Figs.13a)-13c).

Another optical effect that may be considered is a consequence of a translation $t_z$ during the movement of the sample. During the movement, the working distance can decrease or increase. As a result, the final image may be slightly expanded or contracted, respectively, by a factor $\varepsilon$ in comparison to the initial image. In typical measurements this factor is close to 1, and its value can be calculated by evaluation of the change of the observed coordinates after a displacement in $z$ direction only:

$$x_{i,B}^{real} = x_{i,A}^{real} \qquad (8a)$$

$$y_{i,B}^{real} = y_{i,A}^{real} \qquad (8b)$$

$$WD_B = WD_A - t_z \qquad (8c)$$

In that case eq. 7a can be re-written, with help of eq. 8, as:

$$x_{i,A} - x_0 = \left(x_{i,A}^{real} - x_0\right)\frac{WD_A}{WD_A - \Delta z} \tag{9a}$$

$$x_{i,B} - x_0 = \left(x_{i,B}^{real} - x_0\right)\frac{WD_B}{WD_B - \Delta z} = \left(x_{i,A}^{real} - x_0\right)\frac{WD_A}{WD_A - t_z - \Delta z} \tag{9b}$$

The combination of eq. 9b and eq. 9a leads to:

$$x_{i,B} - x_0 = \left(x_{i,A} - x_0\right)\frac{\left(WD_A - \Delta z\right)}{WD_A}\frac{WD_A}{WD_A - t_z - \Delta z} \tag{10}$$

Since a factor $\varepsilon$ can be defined as:

$$\varepsilon = \frac{x_{i,B} - x_0}{x_{i,A} - x_0} = \frac{y_{i,B} - y_0}{y_{i,A} - y_0} \tag{11}$$

we can conclude that, by use of eq. 10 in eq. 11:

$$\varepsilon = \frac{WD_A - \Delta z}{WD_A - \Delta z - t_z} \approx 1 + \frac{t_z}{WD} \tag{12}$$

Therefore, the optical effect of the translation $t_z$ during the movement of the sample can be considered to be a uniform effect, while $\Delta z_i$ << WD and $t_z$ << WD. For instance, at a working distance of 9 mm with an error of 0.1% (i.e. 9 $\mu$m), an uncertainty of 30 nm will be obtained in an image of $30 \times 30$ microns. If the image resolution is 1000 x1000 pixels, then the pixel size is 30 nm, which is close to the uncertainty range. Actually, this value is quite large, since DIC displacements are calculated at sub pixel regime.

*Application of the technique*

In the following, application of the invention is explained with reference to three examples which illustrate different steps of the method according to the invention. Although these examples include SEM as image acquisition technique and DIC as displacement quantification technique, the present invention is not limited to methods including SEM or DIC, or its combination.

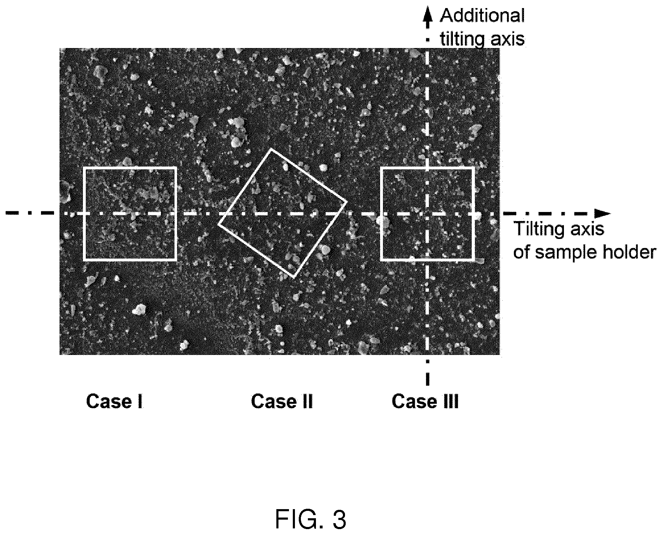

In the present examples, image acquisition was carried out with a Lyra (Tescan) FEG-SEM microscope operating at 10 kV and a working distance of 9 mm. The images (30x30 $\mu$m$^2$ and resolution of 768x768 pixels) were recorded in integration mode in order to minimize the presence of nonrandom noise. The sample was a steel sample with zirconia particles dispersed on its surface. Fig. 3 shows how the tilting axes were oriented in three "Cases" forming the present examples. In Cases I and II, the sample was tilted around a rotation axis of the sample stage only.

In Case I the images were taken with the *x* axis of the image essentially parallel (within experimental constraints) to the tilting axis. In Case II, the images were scanned in a direction at an angle of about 35° relative to the tilting axis (see Fig. 3). In Case III the sample was not tilted to different degrees about the same axis, but first tilted about an axis substantially in *x* direction and subsequently tilted about a second tilting axis substantially perpendicular to the *x* axis. In all cases, images have been captured with the sample tilted to several nominal tilt angles ($\theta_{nom}$) between 0.5 and 12°). In each case, the images obtained after tilting were compared by DIC with the initial image before movement. The DIC process was carried out with Aramis 5.3 software, using facet sizes of 21 and 9 pixels for each (data) point and overlapping of 11 and 5 pixels, respectively. The DIC process was performed without activating any additional correction option in the software. The 3D reconstructions have been plotted with the WSxM software (I. Horcas et al., Rev. Sci. Instrum. 78 (2007) 013705).

In the following, first, the method for fitting the experimental data is presented. Next, the calculation of parameters for the three-dimensional reconstruction and two methods for finding a unique solution are described.

*Fitting of experimental data*

The influence of the optics considered in this example is a factor ε that multiplies the real coordinates after the movement in order to reach the observed ones. In that regard, the influence of the optical distortion can be introduced in eq. 6 by multiplication of one side of both expressions by $\varepsilon$ ($\varepsilon$=1 in the other side). Therefore, eq. 6 can be re-written in the following form:

$$x_{i,B} = q_1 x_{i,A} + q_2 y_{i,A} + q_3 + \varepsilon R_{xz} \Delta z_i \tag{13a}$$

$$y_{i,B} = q_4 x_{i,A} + q_5 y_{i,A} + q_6 + \varepsilon R_{yz} \Delta z_i \tag{13b}$$

where,

$$q_1 = \varepsilon \left( R_{xx} + R_{xz} p_x \right) \tag{14a}$$

$$q_2 = \varepsilon \left( R_{xy} + R_{xz} p_y \right) \tag{14b}$$

$$q_3 = \varepsilon \left( t_x + R_{xz} p_z \right) \tag{14c}$$

$$q_4 = \varepsilon \left( R_{yx} + R_{yz} p_x \right) \tag{14d}$$

$$q_5 = \varepsilon \left( R_{yy} + R_{yz} p_y \right) \tag{14e}$$

$$q_6 = \varepsilon \left( t_y + R_{yz} p_z \right) \tag{14f}$$

The six terms {q} represent the rotation, translation and 'optical expansion/contraction' of a flat plane without roughness (i.e. without z topography). All the random topographical information is stored in $\Delta z_i$. Therefore, we can find the values of {q} by two fittings of {$x_{i,B}$} and {$y_{i,B}$} against their corresponding {$x_{i,A}$, $y_{i,A}$} by using eq. 13. Nevertheless, the experimental data consists of displacements of the points (facets) in x and y directions obtained from the DIC procedure ($\delta x$ and $\delta y$, respectively). These parameters can be calculated as:

$$\delta x_{i,AB} = x_{i,B} - x_{i,A} \tag{15a}$$

$$\delta y_{i,AB} = y_{i,B} - y_{i,A} \tag{15b}$$

Therefore, eq. 13 can be re-formulated in 'DIC terms' instead of 'rigid body motion', as:

$$\delta x_{i,AB} = Q_1 x_{i,A} + Q_2 y_{i,A} + Q_3 + \varepsilon R_{xz} \Delta z_i \tag{16a}$$

$$\delta y_{i,AB} = Q_4 x_{i,A} + Q_5 y_{i,A} + Q_6 + \varepsilon R_{yz} \Delta z_i \tag{16b}$$

where $Q_j = q_j$, except that $Q_1 = q_1 - 1$ and $Q_5 = q_5 - 1$.

For each set of DIC data corresponding to a particular tilt, the values of $\{Q\}$ are calculated by fitting to eq. 16. Fig. 4a) shows an illustrative example of a map of DIC displacements in $y$ direction from Case II and Fig. 4b) shows a fitting performed using eq. 16b. In Fig. 4a), the displacements of the points appear distributed in a diagonal manner, in a direction perpendicular to the axis of tilt. However, as illustrated in Fig. 4b), the deviation of the displacement of each point from the displacement of a corresponding point on the average plane described by the set of Q's depends on $\varepsilon$, on a rotation term and on $\Delta z_i$. The quality of the fittings can be observed in Figs. 5a) to 5c). All plots show a slope of 1 and ordinate at the origin in zero. Larger ranges of variation of $\delta x$ and $\delta y$ were obtained when larger tilt angles were used. However, differences can be seen between plots of $\delta x$ and $\delta y$ from the same Case. In Case I, the values of $\delta x$ are less scattered than the values of $\delta y$ of which dispersion increases with the tilt angle (the graphs of $\delta x$ and $\delta y$ are not of the same scale). Since in Case I, the tilt axis was substantially parallel to the $x$ axis, all the topographical information has been transferred to the $y$ axis only, which explains the difference of behavior. In fact, for $\delta y$, the deviation of each point from the diagonal line is directly correlated to the value of its $z$ coordinate. In the case of $\delta x$, the deviations are mostly a consequence of noise caused by DIC and image processes. A different situation can be observed in Case II (cf. Fig. 4b). In this Case, the increase in dispersion with the tilt angle occurred in both plots. This is a consequence of tilting about an axis at 35° to the $x$-direction (see Fig. 3). Therefore, topographical information is expressed in deviation of each point from the diagonal line for both $\delta x$ and $\delta y$. In Case III, the tilts about mutually perpendicular axes lead to different results. The tilt about the $x$-axis causes most of the dispersion and variation due to differences in $z$-coordinate values to be expressed in deviation of each point from the diagonal line for both $\delta y$, while just noise appears in the direction of the $x$ axis, as in Case I. The tilt about the $y$ axis shows the opposite behavior, with most of the dispersion and variation due to differences in $z$-coordinate values to be expressed in deviation of each point from the diagonal line for both $\delta x$ and only noise in the direction of the $y$ axis.

The differences between the fittings to data that would have represented displacements of points on a perfectly plane surface tilted about the same angle and the real data is of particular interest, since the desired topographical information can be derived from these differences. After eq. 16, we define:

$$\Delta \delta x_{i,AB} = \delta x_{i,AB} - \left( Q_1 x_{i,A} + Q_2 y_{i,A} + Q_3 \right) = x_{i,B} - \left( q_1 x_{i,A} + q_2 y_{i,A} + q_3 \right) = \varepsilon R_{xz} \Delta z_i \tag{17a}$$

$$\Delta \delta y_{i,AB} = \delta y_{i,AB} - \left( Q_4 x_{i,A} + Q_5 y_{i,A} + Q_6 \right) = y_{i,B} - \left( q_4 x_{i,A} + q_5 y_{i,A} + q_6 \right) = \varepsilon R_{yz} \Delta z_i \tag{17b}$$

The ratio is of interest as well, since:

$$\tan \varphi = \frac{\Delta \delta y_{i,AB}}{\Delta \delta x_{i,AB}} = \frac{R_{yz}}{R_{xz}} \tag{18}$$

where $\varphi$ is the angle formed in the representation of $\Delta \delta y$ versus $\Delta \delta x$. These plots are depicted in in Fig. 6a)-6c) for all Cases. Fig. 6a)-6c) show the differences between the corresponding data in Figs. 5a)-5c) and the diagonals ($y=x$). For Case I, the data form an almost vertical line, indicating that the topographical information is substantially stored in the $y$ direction only, in agreement with tilting about an axis substantially in the $x$ direction. In Case II, the data are dispersed substantially along a line deviating from the vertical, indicating that topographical information is stored not only in the $y$ direction, but also in the $x$ direction. In both Cases, the angle $\varphi$ is depicted (cf. eq. 18). In Case I, $\varphi = 89,7°$, i.e. almost vertical. In Case II, $\varphi = 122,7°$, i.e. almost 35° deviated from the vertical, which is in agreement with the angle between the scanning direction and the tilt axis. In Case III, the differences found when tilting about the $x$ axis are dispersed in substantially the $y$ direction (angle 88,7°) and the differences found when tilting about the $y$ axis are dispersed in substantially the $x$ direction (angle - 0,3°). Thus, the sample can be tilted about any angle, the values of $\varphi$ angle automatically indicating in which direction or directions the differences representing the topographical information is to be found (eq. 18).

*Calculation of parameters*

For the calculation of the $\Delta z_i$ data, the $\{q\}$ or $\{Q\}$ sets obtained previously for evaluating the seven unknown parameters are used:

- four from rotation ($a_x$, $a_y$, $a_z$ and $\theta$),
- two from the plane ($p_x$ and $p_y$) and
- one from the optical expansion/contraction ($\varepsilon$).

To reach that objective, we have six equations: (equations 4, 14a, 14b, 14d, 14e and 18). Therefore, one degree of freedom is left. (Equations 14c and 14d will not be used, since they include translations $t_x$ and $t_y$ which are also not known.) By combination of the six equations mentioned above, the following expressions can be found:

$$\frac{\sin\theta}{1-\cos\theta} = a_z\Omega, \text{ with } \Omega = \begin{cases} \dfrac{q_2 a_y - (q_5 + \varepsilon)a_x}{q_2 a_x + (q_5 - \varepsilon)a_y} \\[2mm] \dfrac{(q_1 + \varepsilon)a_y - q_4 a_x}{(q_1 - \varepsilon)a_x + q_4 a_y} \\[2mm] \dfrac{a_y \cos\varphi - a_x \sin\varphi}{a_x \cos\varphi + a_y \sin\varphi} \end{cases} \tag{19}$$

The angle $\theta$ can be obtained from eq. 19 if $a_z$ is known, as:

$$\theta = 2\arctan\left(\frac{1}{a_z\Omega}\right) \tag{20}$$

If $\varepsilon$ equals 1, the three expressions in eq. 19 are not independent and the third equation does not provide any additional information. However, in any realistic setup this is not the case, and the value of $\varepsilon$ can be calculated from parameters obtained from fitting after combining eqs. 19:

$$\varepsilon = \left[(q_5 \cos\varphi - q_2 \sin\varphi)^2 + (q_4 \cos\varphi - q_1 \sin\varphi)^2\right]^{1/2} \tag{21}$$

At this moment, although one of the seven unknown parameters listed before has been calculated, there is still one degree of freedom in our system Therefore, a unique solution cannot be reached from two images alone, and just a 'family of solutions' in terms of the ratio $a_x/a_y$ can be obtained. In other words, we will get sets of permitted combinations of $\{a_x, a_y, a_z, \theta, p_x, p_y\}$. If one of these parameters would be known, the others would be fixed immediately. The ratio $a_x/a_y$ can be calculated from any pair combinations from eq. 19:

$$\frac{a_x}{a_y} = \frac{(q_2 + q_4)\varepsilon \pm \sqrt{(q_2 + q_4)^2\varepsilon^2 - [q_2 q_4 - (q_5 - \varepsilon)(q_1 + \varepsilon)][q_2 q_4 - (q_5 + \varepsilon)(q_1 - \varepsilon)]}}{[q_2 q_4 - (q_5 + \varepsilon)(q_1 - \varepsilon)]} \tag{22a}$$

$$\frac{a_x}{a_y} = \frac{-\varepsilon\sin\varphi \pm \sqrt{\varepsilon^2\sin^2\varphi - [(q_5 - \varepsilon)\cos\varphi - q_2\sin\varphi][(q_5 + \varepsilon)\cos\varphi - q_2\sin\varphi]}}{[(q_5 + \varepsilon)\cos\varphi - q_2\sin\varphi]} \tag{22b}$$

$$\frac{a_x}{a_y} = \frac{\varepsilon\cos\varphi \pm \sqrt{\varepsilon^2\cos^2\varphi - [q_4\cos\varphi - (q_1 - \varepsilon)\sin\varphi][q_4\cos\varphi - (q_1 + \varepsilon)\sin\varphi]}}{[q_4\cos\varphi - (q_1 - \varepsilon)\sin\varphi]} \tag{22c}$$

Two solutions are obtained from each equation, depending on the sign of the square root, and therefore in total six solutions will be found. However, the correct one is the only one that is repeated three times, while the other ones are mutually different. After obtaining $\varepsilon$ and $a_x/a_y$, there is one last degree of freedom. Values of $a_z$, $p_x$, $p_y$ and $\theta$ can for example be calculated from eqs. 4, 14 and 20 after assuming a value for $a_x$ or $a_y$. The signs of $a_z$ and $\theta$ are linked by eq. 20.

*Finding a unique solution*

In practice, the sets of points within a 'family of solutions' form corresponding 3D maps with different $z$ scales. This degree of freedom can be eliminated by including a third SEM image C and (in addition to the DIC set AB) a DIC set AC representing the displacements of corresponding points between image A and a third image C. As depicted in Table 1, three parameters are dependent on the starting situation A only: the plane parameters $p_x$ and $p_y$ and the sample topography $\Delta z_i$ (see eq. 5). Therefore, by including another DIC set AC, we introduce only one more degree of freedom similar to the one in the AB set, but we also introduce three additional constraints. As a consequence, we can eliminate all unknown parameters from the evaluations of the DIC sets AB and AC. In fact, a redundancy is obtained that allows two methods to reach a unique solution.

Thus, the actual rotation parameters can be calculated from the observed displacements by requiring that for at least two types of physical parameters of the sample, such as orientation of the sample plane in the first image and distances of corresponding points to the sample plane, the value resulting from the first set of displacements is identical to the value resulting from the second set of displacements. Accordingly, accurate calibration and control of the rotation is not required, and the need of complex calibrations has been circumvented. One method (hereinafter Method 1) uses only the plane parameters ($p_{x,AB} = p_{x,AC}$ and $p_{y,AB} = p_{y,AC}$) as physical parameters of the sample. In another method 2 (hereinafter Method 2), the topographical information ($\Delta z_{i,AB} = \Delta z_{i,AC}$) is also used as a physical parameter of the sample together with a combination of the plane parameters.

Method 1

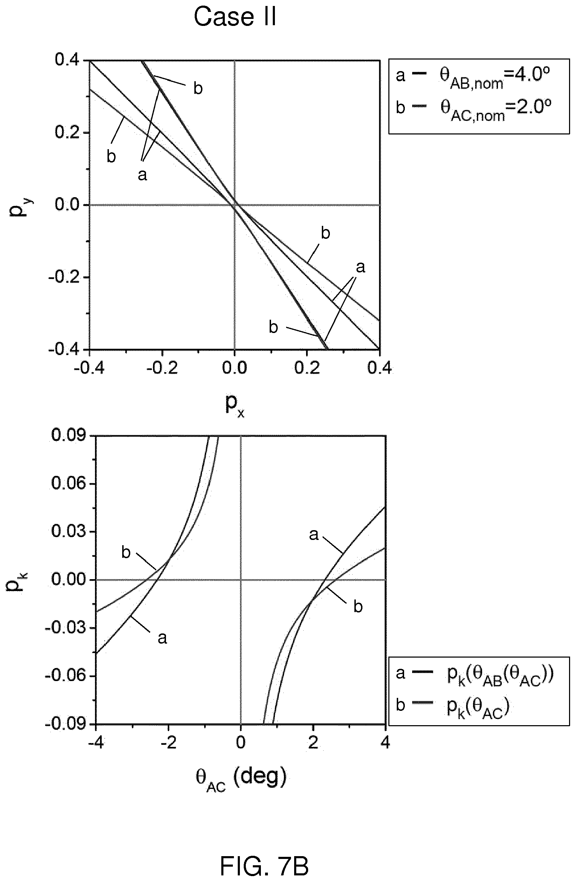

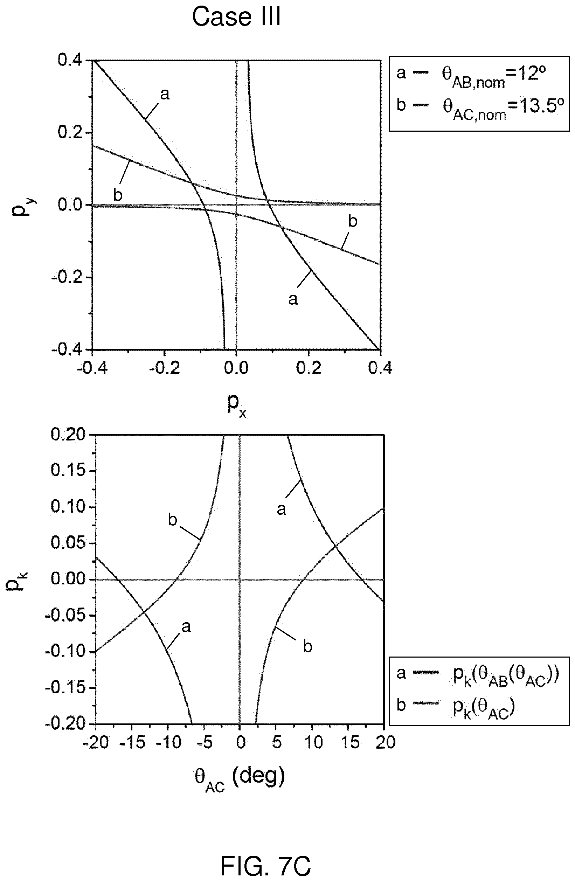

From corresponding 3D maps with different $z$ scales, a unique solution for both tilts can be found by determining a solution for which the values of $px$ and $p_y$ agree for different tilts (i.e. a crossing point of plots of $p_y$ vs. $p_x$ for different tilts; in other words $p_{x,AB} = p_{x,AC}$, and $p_{y,AB} = p_{y,AC}$). Such representations are depicted in the top graphs of Figs 7a)-7c). In each Case, the graph shows two crossing points, which actually represent the same solution for positive or negative reconstructions of the 3D topography. It can be seen that in Cases I and II the lines are quite close to each other and intersect at a very small angle. This entails a relatively large uncertainty in the determination of the crossing point. In contrast, the crossing of the lines of each pair is at a much larger angle in Case III, so that a much more accurate determination of the crossing point is obtained, assuming that the lines as such are of similar accuracy. This is a consequence of the number of axes of rotation about which the sample has been tilted. In Cases I and II, just one axis was used (i.e. identical values of $\varphi$ in Fig. 6 for different tilts), which leads to information regarding displacement in directions perpendicular to the single tilt axis only. Rotating the imaging conditions (i.e. Case II vs. Case I) does not make a big difference in this respect (cf. Case II in Figure 7), since also in this situation information is derived only from different amounts of displacement in a single common direction. Nevertheless, since typical sample holders for SEM apparatus only allow tilting about one axis of rotation, it is relevant for practice that also from images scanned from a sample in a starting position and from that sample tilted to different degrees about the same axis, a quantitative representation of the surface topography of practically meaningful accuracy can obtained.

Method 2

While method 1 is based on information about the sample plane ($p_y$ and $p_x$) only, in method 2 one plane parameter ($p_k$) and the topographical information ($\Delta z_i$) are used (see Table 1). Furthermore, while in method 1, the solution is found by comparison of independent sets of data from two tilts (AB vs. AC), in method 2 the information from both tilts is mixed. If two tilts are considered, we will find two values of $\varphi$ that can be labeled as $\varphi_{AB}$ and $\varphi_{AC}$. The average of these angles can be defined as:

$$\varphi_{ABC} = \frac{1}{2}\left(\varphi_{AB} + \varphi_{AC}\right) \tag{23}$$

For the further analysis, a new set of coordinates *(k, l, z)* replacing (x, *y, z*) is defined as:

$$k = x \cos \varphi_{ABC} + y \sin \varphi_{ABC} \qquad (24a)$$

$$l = -x \sin \varphi_{ABC} + y \cos \varphi_{ABC} \qquad (24b)$$

These new axes of coordinates are depicted in Fig. 6. The rotation vector can be expressed in the new set of coordinates with the use of eq. 24, i.e. $(a_k, a_l, a_z)$ instead of $(a_x, a_y, a_z)$. In a similar way, we can calculate the components of the plane in this new coordinate system, as:

$$p_k = p_x \cos \varphi_{ABC} + p_y \sin \varphi_{ABC} \qquad (25a)$$

$$p_l = -p_x \sin \varphi_{ABC} + p_y \cos \varphi_{ABC} \qquad (25b)$$

In case of tilts around the same tilt axis or around similar tilt axes (Cases I and II), this change of coordinate system allows concentrating the topographical information in the direction of one of the axes, e.g. the $k$ axis, and minimizing all information other than noise in the direction of the other axis, e.g. the $l$ axis, as shown in Figure 6b). Thus, for each tilt we can get one expression equivalent to eq. 17 in the $k$ direction by using eq. 24a (and in the $l$ direction using eq. 24b), as:

$$\Delta \delta k_{i,AB} = \Delta \delta x_{i,AB} \cos \varphi_{ABC} + \Delta \delta y_{i,AB} \sin \varphi_{ABC} \qquad (26a)$$

$$\Delta \delta k_{i,AC} = \Delta \delta x_{i,AC} \cos \varphi_{ABC} + \Delta \delta y_{i,AC} \sin \varphi_{ABC} \qquad (26b)$$

The overall deviations caused by the surface topography in the $z$ direction can be expressed as the root-mean-square (RMS) deviation in the $k$ direction, as:

$$RMS(\Delta \delta k_{AB}) = \sqrt{\frac{1}{N} \sum_{i=1}^{N} \left( \Delta \delta k_{i,AB} - \overline{\Delta \delta k_{AB}} \right)^2} \qquad (27)$$

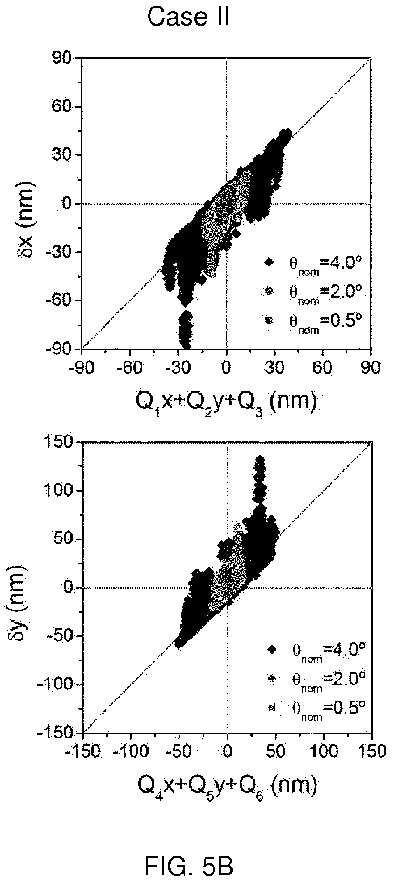

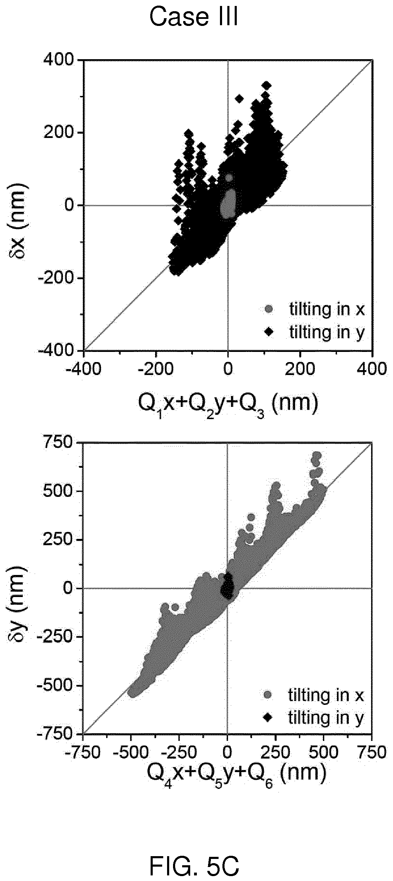

where $N$ is the number of points evaluated (number of facets), and $\overline{\Delta \delta k_{AB}}$ is the average of the $N$ $\Delta \delta k_{i,AB}$ values. In this case, the average equals zero, as an ultimate consequence of the fitting procedure when calculating $\{Q\}$, which subtracts a fitted plane from the original data (cf. eqs. 16 and Fig. 5).

As illustrated in eq. 18, the topographical information is stored in the ratio of two rotation terms. In this case, the new coordinate system has been defined in such a way that most of the topographical information is in the k direction. In this, the theoretical requirement that $\Delta z_{i,AB} = \Delta z_{i,AC}$ (see Table 1) is converted into a practical relationship between the RMS of local deviation data from two different tilts:

$$\frac{RMS(\Delta \delta k_{AB})}{RMS(\Delta \delta k_{AC})} = \frac{R_{k,AB}}{R_{k,AC}} = \frac{\{a_k a_z (1 - \cos \theta) + a_l \sin \theta\}_{AB}}{\{a_k a_z (1 - \cos \theta) + a_l \sin \theta\}_{AC}} \qquad (28)$$

This relationship between $\theta_{AB}$ and $\theta_{AC}$ is in addition to the relationship $p_{k,AB} = p_{k,AC}$. A practical way to find a unique solution is the representation of a double-plot of $p_k$ vs. $\theta_{AC}$. To reach it, we calculate $\varepsilon$ and $a_y/a_x$ as before (see eqs. 21 and 22) and find functions $p_k(\theta_{AB})$ and $p_k(\theta_{AC})$ which depend only on the angle and known parameters. This is done through the subsequent use of the following equations: $p_k$ (eq. 25a), $p_x$ and $p_y$ (eq. 14), rotation terms (eq. 3), $a_z$ (eq. 19) and $a_y$ (eq. 4).

Finally, the relation between $\theta_{AB}$ and $\theta_{AC}$ (eq. 28) is used to define a function $\theta_{AB}(\theta_{AC})$, and to reach two independent relations that can be labeled as $p_k(\theta_{AC})$ and $p_k(\theta_{AB}(\theta_{AC}))$. These functions are shown in the bottom graphs of Figs 7a)-7c).

By including the determination of the direction in which the largest variation in differences between the displacements and the fitting of displacements is found in the fitting of displacements to fitting planes, the accuracy of calculated three-dimensional surface topography data is improved. More specifically, it can be seen that much less sharp crossing angles are obtained, particularly for Case II. This procedure is more accurate because it is based only on one of the parameters of the plane ($p_k$), which is the one that contains the information when tilting using only one rotation axis. Nevertheless, we can see that this method can be also used in Case III, where tilts were performed around two tilting axes oriented in substantially different directions. This is because, although in this situation not all the topographical information is expressed in the direction of the $k$ axis (cf. Figure 6c)), there is still variation caused by topography in the direction of the $k$ axis to achieve an accurate solution.

Both methods 1 and 2 are based on the insight that three connections link the two tilts from a starting position, as summarized in Table 1. By using the equations in a way similar to how it was described in the previous paragraph, it is possible to re-plot each curve in Figs. 7a)-7c) as relations between both tilt angles $\theta_{AC}$ and $\theta_{AB}$, as included in Fig. 8. Although this type of plot is illustrative for comparison purposes, it is inconvenient for computation due to the appearance of many inconsistent solutions. Four lines appear in each plot. This is because $p_k$, $p_x$ and $p_y$ are not independent (cf. eq. 28a). For Case I, the curves from $p_k$ and $p_y$ are overlapping, since the axis $k$ is very close to axis $y$ (cf. Fig. 6a)). In addition, the information from $p_x$ is very similar to that obtained from $\Delta z_i$ (eq. 28). In the other two Cases, $p_k$ is between $p_x$ and $p_y$, while data from $\Delta z_i$ appears different. Nevertheless, in all of the cases, the lines cross basically in the same point, and similar results are obtained from both methods (cf. Table 2).

*Examples of 3D reconstructions of topographical information*

In this section we will show examples of 3D reconstructions performed after the data treatment explained before. Some 3D mappings of Case I are shown in Figs. 9a)-9f). The original SEM picture is included in Fig. 9a) as a reference for comparison. Figure 9b shows the reconstruction obtained from the image tilted at $\theta_{nom}$ = 0.5° from the initial, using $\delta x$ data. It can be seen that this image does not correspond to the actual topography of the sample, and it is composed only by noise. This can be expected, considering that the topographical information is only included in the $y$ axis (cf. Figure 6a)). In contrast, in the pictures 9c)-9e) (based on $\delta y$ data) the observed features correspond very well to the image obtained by SEM. The image taken at $\theta_{nom}$ = 0.5° (Figure 9c)) appears noisy when compared with that obtained from $\theta_{nom}$ = 2.0° (Figure 9d)), which indicates that 0.5° was a too small tilt to get a good signal-to-noise ratio for the present sample in view of its roughness. A larger tilt angle is preferred for samples with a small roughness in order to improve the quality of the 3D reconstruction as is illustrated by Figs 9d) and 9e) which show the reconstructions from $\theta_{nom}$ = 2.0°. In Fig. 9e) smaller facet sizes were used during DIC than in Fig. 9d). For this scanned sample, this resulted in a better lateral resolution and a better agreement with the features appearing in the basic SEM image (Fig. 9a)). The additional detail shown in Fig. 9e) matches the qualitative information appearing from the basic SEM image (Fig. 9a)) very well and remains consistent with the more smoothed image of Fig. 9d). Therefore, use of the lowest facet size that allows DIC recognition is advantageous.

Figure 9f) shows histograms of the images presented in Figure 9c) to 9e). In addition, a histogram of an image obtained after $\theta_{nom}$ = 4.0° is also included. It can be seen that the histograms are very similar, in agreement with reconstructions of the same area. The histogram of the image obtained after $\theta_{nom}$ = 2.0° with small facet size appears is wider and lower than the others. This is because the improved lateral resolution leads to a larger set of $z$ data, which increase the number of facets for which a $z$-value differing from 0 is found.

Figs. 10a)-10c) show 3D plots of the reconstructions obtained from Case II at $\theta_{nom}$ = 2.0°. In this case, different profiles obtained from $x$, $y$ and $k$ axes are shown. As opposite to Figure 9b) and 9c), the same features are identified from images obtained using $\delta x$, or $\delta y$ data (Figs. 10a) and b)), since there is topographical information in both. In fact, this is the reason to define the new pair of working axis *(k, l)* to concentrate all the topographical information in one. The result using $k$ axis is shown in Fig. 10c), which shows a profile matching the profiles shown in Figs. 10a) and 10b). Thus, consistency between methods 1 and 2 is verified. The histograms in Figure 10d) shown that also the $z$ values determined in accordance with methods 1 and 2 are very similar.

In this particular Case, $\varepsilon$=1.000036634. With such a small value, it would be tempting to approximate $\varepsilon$ to 1. However, it is preferred not to apply this approximation since then the consistency between images suffers resulting in alterations of the $z$ values by factors of 0.7 and 1.7. Therefore, preferably even very small variations in the working distance are taken into account during processing of image data in order to obtain accurate 3D images.

A schematic representation of an example of an algorithm for performing a method according to the invention for obtaining a 3D reconstruction of quantitative three-dimensional surface topography data of a sample is shown in Fig. 11. In steps 4 and 5, data representing three different images 1, 2, 3 (named A, B, C) scanned from the same sample surface held at different tilts are compared pairwise, resulting in two sets of DIC data 6, 7. In steps 8 and 9 these sets DIC data 6, 7 are each fitted to two fitting planes, resulting in data sets 10, 11 representing fitting parameters $\{q\}_{1-6}$ and

$\varphi$ as well as the data $\delta \Delta x$ and $\delta \Delta y$. From the fitting parameters 10, 11, the expansion parameter $\varepsilon$ is calculated in steps 12 and 13 and the ratio $a_x/a_y$ is quantified, leaving one degree of freedom in each set of fitted data 14, 15. In step 16, by combining the parameters 14, 15 obtained by fitting of the two sets of DIC data 6, 7 and compensating for expansion and/or contraction, unique solutions 17, 18 for each of the rotations AB and AC are obtained. From the known rotations, two 3D reconstructions 19, 20 are calculated (one per DIC). In other words, the uncertainty about the z scale that remains when considering only one DIC set 6 or 7 is eliminated by adding a third image, so that the need of complex calibration procedures for determining the precise amount and axis or axes of rotation is avoided.

A method to correct the perspective distortions is described with reference to a flow chart of an example of an algorithm for performing this method, shown in Fig. 12. As indicated with reference to Fig. 2, the measured displacements as for instance obtained from the DICs result from two effects: the movement of the sample and the manner of observation of the sample. The perspective distortion can be corrected to obtain the real coordinates of the sample with the help of eq. 7. The process starts with the *[x,y,z]* data 19 or 20 obtained from the method shown in Fig. 11, which corresponds to an observation of the sample in an orientation as in situation A (for instance, an average of both 3D profiles 19, 20 is used). Then, in step 21, eq. 7 is used to calculate a first iteration of the real coordinates 22 connected to the observed coordinates in situation A.

The further steps are for checking the accuracy of the iteration and initiating a further iteration if the accuracy does not meet a predetermined level. Steps 23, 24 consist of calculation of the real coordinates 25, 26 in the tilted positions B and C (images 2 and 3 in Fig. 11) corresponding with the first iteration 22, using the movement parameters 17, 18 (see Fig. 11) obtained before. Next, in steps 27-29, the perspective distortion for the three different situations is calculated, resulting in new sets 30-32 of coordinates for the monitored points for the situations A, B and C. In steps 33, 34, new sets of displacement data 35, 36 are determined from these coordinates by subtraction. The new sets of displacement data can be regarded as a 'new DIC'. In decision step 37, if this 'new DIC' matches the observed DIC to a sufficient extent, the calculated set of the real coordinates 22 is accepted as being correct. If not, the 3D algorithm (i.e. starting with steps 8 and 9) shown in Fig. 11 is employed on the new *[x,y,δx,δy]* values to obtain new sets of *[x,y,z]* according to steps 19 and 20. This cycle continues until a predetermined extent of agreement between the 'new DICs' and the DIC obtained directly from the images has been achieved.

An illustration of the effect of the correction for perspective distortions is depicted in Figs. 13a)-13c) in which Fig. 13a) shows an image with a larger field of view than the image on which the previous examples of application were based. Its 3D reconstruction with correction for perspective distortion is shown in Fig. 13b) and the perspective correction used to reach that reconstruction is depicted in Fig. 13c). The 'U' shape of the perspective correction in the y axis is a consequence of the tilting around a rotation axis close to the x axis. It can be seen that, although the perspective correction is smaller than the topography of the sample, its magnitude is important in certain situations.

While, for an easier understanding, the invention is described in the detailed description with reference to examples of its application, the scope of the invention as defined by the appending claims is not limited to these examples. As illustrated in Figure 11, the acquisition of a third image at a different tilting angle provides the information on the basis of which tilting angles and axis can be derived from the images only. However, the accuracy can be improved by inclusion of more images acquired at other angles.

Which angle provides the best results in terms of resolution and accuracy of determined z-values depends strongly on the roughness of the sample, smaller angles being more suitable for acquiring surface topology data from rougher samples. While larger angles allow an improved identification of small roughness, angles should not be too large in order to avoid problems with facet recognition during the DIC process. For instance, for the type of sample used in this example, an approximate tilt range would be between 1 and 15 degrees. No previous information about the SEM or other microscopic equipment is needed, and the 3D map can be just reconstructed from these data by software (DIC and calculation of rotation parameters) in period of time of typical user operation. The images can be acquired in various manners, for a useful determination of surface topography, variations in tint and or color in the images should allow corresponding points in the images to be identified with a sufficiently fine distribution to recognize topographical features, such as peaks, ridges and valleys, with a resolution that is sufficient for the desired level of detail at which the surface topography is to be determined.

Several features have been described as part of the same or separate embodiments. The invention is defined by the appended claims.

**Tables:**

Table 1. Tilt, images, DIC processes, and criteria to find a unique solution.

| Tilting and DIC process | | AB | AC |
|---|---|---|---|
| Images compared | | A and B | A and C |
| Family of parameters obtained | | $\{a_x, a_y, a_z, \theta, p_x, p_y\}_{AB}$ | $\{a_x, a_y, a_z, \theta, p_x, p_y\}_{AC}$ |
| Connection between both tilts | same plane | $p_x = p_{x,AB} = p_{x,AC}$ $p_y = p_{y,AB} = p_{y,AC}$ | |
| | same topography | $\{\Delta z_i\} = \{\Delta z_i\}_{AB} = \{\Delta z_i\}_{AC}$ | |

Table 2. Angles obtained from both calculations methods for each Case under study.

| Case | $\theta_{AB}$ (deg) | | | $\theta_{AC}$ (deg) | | |
|---|---|---|---|---|---|---|
| | Nominal | Method 1 | Method 2 | Nominal | Method 1 | Method 2 |
| Case I | 4.0 | 4.832 | 4.754 | 2.0 | 2.443 | 2.341 |
| Case II | 4.0 | 3.973 | 3.900 | 2.0 | 2.037 | 1.973 |
| Case III | 12.0 | 11.724 | 11.997 | ca. -13.5 | -13.764 | -13.281 |

**Claims**

1.  A method for determining a set of quantitative three-dimensional surface topography data from images obtained by microscopy, comprising:

    inputting data representing at least three images obtained by microscopy from a surface of a sample into a data processor, each image having been acquired from the surface with the surface positioned in a different orientation in the microscope relative to an optical axis or a central scanning axis of the microscope;
    the data processor determining at least a first set of displacements of corresponding points between a first image and a second image and a second set of displacements of corresponding points between the first image and a third image;
    the data processor fitting directional components in two directions of said first set of displacements to two respective fitting planes, said fitting planes each being defined by parameters of that respective fitting plane, and calculating, from said directional components in each of said two directions, the relative displacements of said corresponding points, said relative displacements each indicating a difference between the displacement of one of said corresponding points and a calculated displacement of a corresponding point on the respective fitting plane;
    the data processor fitting directional components in two directions of said second set of displacements to two other respective fitting planes, said other fitting planes each being defined by parameters of that respective other fitting plane, and calculating, from said directional components in each of said two directions, the relative displacements of said corresponding points, said relative displacements each indicating a difference between the displacement of one of said corresponding points and a calculated displacement of a corresponding point on the respective other fitting plane;
    the data processor calculating an orientation of a sample plane for each image and the angle and the axis of rotation of the sample plane with respect to the optical or central scanning axis from the parameters of the fitting planes by requiring that for at least two types of physical parameters, such as orientation of the sample plane in the first image and distances of said corresponding points to the sample plane, the value resulting from said first set of displacements is identical to the value resulting from said second set of displacements; and
    the data processor calculating at least one set of quantitative three-dimensional surface topography data from the calculated orientation of the sample plane for each image and the angle and axis of rotation of the sample plane and at least said first or second relative displacements.

2.  A method according to claim 1, wherein during image acquisition, the sample plane is at a working distance from scanning or focusing optics and wherein the parameters defining the fitting planes are used to calculate expansion/contraction parameters representing overall image expansion or contraction due to changes in the working distance between the working distance during acquisition of the first image and the working distance during acquisition of the second image and between the working distance during acquisition of the first image and the working distance during acquisition of the third image.

3. A method according to claim 1 or 2, wherein the fitting of each of the sets of displacements to two fitting planes includes determining the direction in which the largest variation in the relative displacements is found.

4. A method according to any of the preceding claims, further comprising calculating differences between locations and the displacements measured from centric perspective and locations and the displacements in laboratory coordinates from the calculated surface topography data, the calculated orientation of the sample plane and the calculated rotation of the sample.

5. A method according to claim 4, further comprising an iterative procedure compensating for differences between the locations and the displacements measured from centric perspective and the locations and the displacements in laboratory coordinates on the basis of the calculated surface topography data, the calculated orientation of the sample plane and the calculated rotation of the sample.

6. A method according to any of the preceding claims, wherein the determination of the sets of displacements is carried out by two-dimensional digital image correlation (DIC).

7. A method for determining a set of quantitative three-dimensional surface topography data from a sample surface, comprising:

positioning a sample surface in a microscope in a first position and obtaining data representing a first image of that sample surface;
positioning the sample surface in the microscope in a second position tilted relative to the first position and obtaining data representing a second image of that sample surface;
positioning the sample surface in the microscope in a third position tilted relative to the first position and obtaining data representing a third image of that sample surface; and
a method according to any of the preceding claims for determining a set of quantitative three-dimensional surface topography data from said images.

8. A computer program product in a computer executable form for determining a set of quantitative three-dimensional surface topography data from images obtained by microscopy, comprising:

instructions for accessing data representing at least three images obtained by microscopy from a surface of a sample into a data processor, each image having been acquired from the surface with the surface positioned in a different orientation in the microscope relative to an optical axis or a central scanning axis of the microscope;
instructions determining at least a first set of displacements of corresponding points between a first image and a second image and a second set of displacements of corresponding points between the first image and a third image;
instructions for fitting directional components in two directions of said first set of displacements to two respective fitting planes, said fitting planes each being defined by parameters of that respective fitting plane, and calculating, from said directional components in each of said two directions, the relative displacements of said corresponding points, said relative displacements each indicating a difference between the displacement of one of said corresponding points and a calculated displacement of a corresponding point on the respective fitting plane;
instructions for fitting directional components in two directions of said second set of displacements to two other respective fitting planes, said other fitting planes each being defined by parameters of that respective other fitting plane, and calculating, from said directional components in each of said two directions, the relative displacements of said corresponding points, said relative displacements each indicating a difference between the displacement of one of said corresponding points and a calculated displacement of a corresponding point on the respective other fitting plane;
instructions for calculating an orientation of a sample plane for each image and the angle and the axis of rotation of the sample plane with respect to the optical or central scanning axis from the parameters of the fitting planes by requiring that for at least two types of physical parameters, such as orientation of the sample plane in the first image and distances of said corresponding points to the sample plane, the value resulting from said first set of displacements is identical to the value resulting from said second set of displacements; and
instructions for calculating at least one set of quantitative three-dimensional surface topography data from the calculated orientation of the sample plane for each image and the angle and axis of rotation of the sample plane and at least said first or second relative displacements.

9. A computer program product according to claim 8, stored on a non-transitory data storage medium.


**Patentansprüche**

1. Verfahren zur Bestimmung eines Satzes quantitativer dreidimensionaler Oberflächentopografiedaten aus Bildern, erhalten durch Mikroskopie, umfassend:

das Eingeben von Daten, die mindestens drei Bilder, erhalten durch Mikroskopie von einer Oberfläche einer Probe, darstellen, in einen Datenprozessor, jedes Bild erfasst von der Oberfläche mit der Oberfläche positioniert in einer anderen Ausrichtung in dem Mikroskop in Bezug auf eine optische Achse oder eine zentrale Scanachse des Mikroskops;
das Bestimmen, durch den Datenprozessor, von mindestens einem ersten Satz von Verschiebungen entsprechender Punkte zwischen einem ersten Bild und einem zweiten Bild und einem zweiten Satz von Verschiebungen entsprechender Punkte zwischen dem ersten Bild und einem dritten Bild;
das Anbringen, durch den Datenprozessor, von zwei Richtungskomponenten in zwei Richtungen von dem ersten Satz von Verschiebungen zu zwei entsprechenden Anbringungsebenen, welche Anbringungsebenen jeweils von Parametern dieser entsprechenden Anbringungsebene definiert werden, und das Berechnen anhand der Richtungskomponenten in jeder der zwei Richtungen, der relativen Verschiebungen der entsprechenden Punkte, welche relativen Verschiebungen jeweils einen Unterschied der Verschiebung von einem der entsprechenden Punkte und eine berechnete Verschiebung eines entsprechenden Punkts auf der jeweiligen Anbringungsebene angibt;
das Anbringen, durch den Datenprozessor, von Richtungskomponenten in zwei Richtungen des zweiten Satzes von Verschiebungen zu zwei anderen jeweiligen Anbringungsebenen, welche anderen Anbringungsebenen jeweils von Parametern dieser entsprechenden anderen Anpassung definiert werden, und Berechnen, anhand der Richtungskomponenten in jeder der zwei Richtungen, der relativen Verschiebungen der entsprechenden Punkte, welche relativen Verschiebungen jeweils einen Unterschied zwischen der Verschiebung von einem der entsprechenden Punkte und einer berechneten Verschiebung von einem entsprechenden Punkt auf der jeweiligen anderen Anbringungsebene angeben;
das Berechnen, durch den Datenprozessor, einer Ausrichtung einer Probeebene für jedes Bild und des Winkels und der Drehachse der Probeebene in Bezug auf die optische oder zentrale Scanachse anhand der Parameter der Anbringungsebenen durch Verlangen, dass für mindestens zwei Arten physischer Parameter, wie etwa Ausrichtung der Probeebene in dem ersten Bild und Abstände der entsprechenden Punkte auf der Probeebene, dass der Wert, resultierend aus dem ersten Satz von Verschiebungen identisch ist mit dem Wert, resultierend aus dem zweiten Satz von Verschiebungen; und
das Berechnen, durch den Datenprozessor, von mindestens einem Satz quantitativer dreidimensionaler Oberflächentopografiedaten anhand der berechneten Ausrichtung der Probeebene für jedes Bild und des Winkels und der Drehachse der Probeebene und mindestens der ersten oder zweiten relativen Verschiebungen.

2. Verfahren nach Anspruch 1, wobei während der Bilderfassung die Probeebene in einem Arbeitsabstand von Scan- oder Fokussieroptik ist und wobei die Parameter, welche die Anbringungsebenen definieren, verwendet werden zum Berechnen von Expansions-/Kontraktionsparametern welche die allgemeine Bildexpansion oder -kontraktion aufgrund von Änderungen im Arbeitsabstand zwischen dem Arbeitsabstand während der Erfassung des ersten Bildes und dem Arbeitsabstand während der Erfassung des zweiten Bildes und zwischen dem Arbeitsabstand während der Erfassung des ersten Bildes und dem Abstand während der Erfassung des dritten Bildes darstellen.

3. Verfahren nach Anspruch 1 oder 2, wobei die Anbringung von jedem der Sätze von Verschiebungen an zwei Anbringungsebenen das Bestimmen der Richtung umfasst, in der die größte Abweichung in den relativen Verschiebungen gefunden wird.

4. Verfahren nach einem der vorhergehenden Ansprüche, ferner umfassend die Berechnung von Unterschieden zwischen Standorten und den Verschiebungen, gemessen von zentrischer Perspektive und Standorten und den Verschiebungen in Laborkoordinaten, anhand der berechneten Oberflächentopografiedaten, der berechneten Ausrichtung der Probeebene und der berechneten Drehung der Probe.

**5.** Verfahren nach Anspruch 4, ferner umfassend ein iteratives Verfahren, das den Unterschied zwischen den Orten und den Verschiebungen, gemessen von zentrischer Perspektive und den Orten und den Verschiebungen in Laborkoordinaten, auf der Basis der berechneten Oberflächentopografiedaten, der berechneten Ausrichtung der Probeebene und der berechneten Ausrichtung der Probe.

**6.** Verfahren nach einem der vorhergehenden Ansprüche, wobei das Bestimmen der Sätze von Verschiebungen durch zweidimensionale digitale Bildkorrelation (DIC, engl. Digital Image Correlation) durchgeführt wird.

**7.** Verfahren zur Bestimmung eines Satzes quantitativer dreidimensionaler Oberflächentopografiedaten von einer Probeoberfläche, umfassend:

das Positionieren einer Probeoberfläche in einem Mikroskop in einer ersten Position und Erhalten von Daten, die ein erstes Bild dieser Probeoberfläche darstellen;
das Positionieren der Probeoberfläche in dem Mikroskop in einer zweiten Position, geneigt in Bezug auf die erste Position und Erhalten von Daten, die ein zweites Bild dieser Probeoberfläche darstellen;
das Positionieren der Probeoberfläche in dem Mikroskop in einer dritten Position, geneigt in Bezug auf die erste Position, und Erhalten von Daten, die ein drittes Bild dieser Probeoberfläche darstellen; und
ein Verfahren nach einem der vorhergehenden Ansprüche zur Bestimmung eines Satzes quantitativer dreidimensionaler Oberflächentopografiedaten aus den Bildern.

**8.** Computerprogrammprodukt in einer computerausführbaren Form zur Bestimmung eines Satzes quantitativer dreidimensionaler Oberflächentopografiedaten aus Bildern, erhalten durch Mikroskopie, umfassend:

Befehle zum Zugreifen auf Daten, die mindestens drei Bilder, erhalten durch Mikroskopie von einer Oberfläche einer Probe, in einem Datenprozessor, jedes Bild erfasst von der Oberfläche mit der Oberfläche positioniert in einer anderen Ausrichtung in dem Mikroskop in Bezug auf eine optische Achse oder eine zentrale Scanachse des Mikroskops;
Befehle zur Bestimmung von mindestens einem ersten Satz von Verschiebungen von entsprechenden Punkten zwischen einem ersten Bild und einem zweiten Bild und einem zweiten Satz von Verschiebungen entsprechender Punkte zwischen dem ersten Bild und einem dritten Bild;
Befehle zum Anbringen von Richtungskomponenten in zwei Richtungen des ersten Satzes von Verschiebungen an zwei jeweiligen Anbringungsebenen, welche Richtungsebenen jeweils von Parametern dieser jeweiligen Anbringungsebene definiert werden, und Berechnen, anhand der Richtungskomponenten in jeder der zwei Richtungen, der relativen Verschiebungen der entsprechenden Punkte, welche relativen Verschiebungen jeweils einen Unterschied zwischen den Verschiebungen von einem der entsprechenden Punkte und einer berechneten Verschiebung eines entsprechenden Punktes auf der jeweiligen Anbringungsebene angeben;
Befehle zum Anbringen von Richtungskomponenten in zwei Richtungen des zweiten Satzes von Verschiebungen an zwei anderen jeweiligen Anbringungsebenen, welche anderen Anbringungsebenen von Parametern dieser jeweiligen anderen Anbringungsebene definiert werden, und Berechnen, anhand der Richtungskomponenten in jeder der zwei Richtungen, der relativen Verschiebungen der entsprechenden Punkte, welche relativen Verschiebungen jeweils einen Unterschied zwischen der Verschiebung von einem der entsprechenden Punkte und einer berechneten Verschiebung eines entsprechenden Punktes auf der jeweiligen anderen Anbringungsebene angeben;
Befehle zur Berechnung einer Ausrichtung einer Probeebene für jedes Bild und des Winkels und der Drehachse der Probeebene in Bezug auf die optische oder zentrale Scanachse anhand der Parameter der Anbringungsebenen durch Verlangen, dass für mindestens zwei Arten physischer Parameter, wie etwa Ausrichtung der Probeebene in dem ersten Bild und Abstände der entsprechenden Punkte zu der Probeebene, der Wert, resultierend aus dem ersten Satz von Verschiebungen, identisch ist mit dem Wert, resultierend aus dem zweiten Satz von Verschiebungen; und
Befehle zur Berechnung von mindestens einem Satz quantitativer dreidimensionaler Oberflächentopografiedaten anhand der berechneten Ausrichtungen der Probeebene für jedes Bild und des Winkels und der Drehachse der Probeebene und mindestens der ersten oder zweiten relativen Verschiebungen.

**9.** Computerprogrammprodukt nach Anspruch 8, gespeichert auf einem nichtflüchtigen Datenspeichermedium.

**Revendications**

1. Procédé pour déterminer un jeu de données de topographie de surface tridimensionnelles quantitatives à partir d'images obtenues par microscopie, comprenant :

   l'entrée de données représentant au moins trois images obtenues par microscopie à partir d'une surface d'un échantillon dans un processeur de données, chaque image ayant été acquise à partir de la surface, la surface étant positionnée dans une orientation différente dans le microscope par rapport à un axe optique ou un axe de balayage central du microscope ;

   le processeur de données déterminant au moins un premier jeu de déplacements de points correspondants entre une première image et une deuxième image, et un deuxième jeu de déplacements de points correspondants entre la première image et une troisième image ;

   le processeur de données ajustant des composantes directionnelles dans deux directions dudit premier jeu de déplacements à deux plans d'ajustement respectifs, chacun desdits plans d'ajustement étant défini par des paramètres de ce plan d'ajustement respectif, et calculant, à partir desdites composantes directionnelles dans chacune desdites deux directions, les déplacements relatifs desdits points correspondants, chacun desdits déplacements relatifs indiquant une différence entre le déplacement de l'un desdits points correspondants et un déplacement calculé d'un point correspondant sur le plan d'ajustement respectif ;

   le processeur de données ajustant des composantes directionnelles dans deux directions dudit deuxième jeu de déplacements à deux autres plans d'ajustement respectifs, chacun desdits autres plans d'ajustement étant défini par des paramètres de cet autre plan d'ajustement respectif, et calculant, à partir desdites composantes directionnelles dans chacune desdites deux directions, les déplacements relatifs desdits points correspondants, chacun desdits déplacements relatifs indiquant une différence entre le déplacement de l'un desdits points correspondants et un déplacement calculé d'un point correspondant sur l'autre plan d'ajustement respectif ;

   le processeur de données calculant une orientation d'un plan d'échantillon pour chaque image et l'angle et l'axe de rotation du plan d'échantillon par rapport à l'axe de balayage central ou optique à partir des paramètres des plans d'ajustement en requérant que, pour au moins deux types de paramètres physiques, tels que l'orientation du plan d'échantillon dans la première image et les distances desdits points correspondants au plan d'échantillon, la valeur résultant dudit premier jeu de déplacements soit identique à la valeur résultant dudit deuxième jeu de déplacements ; et

   le processeur de données calculant au moins un jeu de données de topographie de surface tridimensionnelles quantitatives à partir de l'orientation calculée du plan d'échantillon pour chaque image et l'angle et l'axe de rotation du plan d'échantillon et au moins lesdits premiers ou deuxièmes déplacements relatifs.

2. Procédé selon la revendication 1, dans lequel, durant l'acquisition des images, le plan d'échantillon est à une distance de travail des optiques de balayage ou de focalisation, et dans lequel les paramètres définissant les plans d'ajustement sont utilisés pour calculer des paramètres d'expansion/contraction représentant une expansion ou contraction d'image globale du fait de changements de la distance de travail entre la distance de travail durant l'acquisition de la première image et la distance de travail durant l'acquisition de la deuxième image, et entre la distance de travail durant l'acquisition de la première image et la distance de travail durant l'acquisition de la troisième image.

3. Procédé selon la revendication 1 ou 2, dans lequel l'ajustement de chacun des jeux de déplacements à deux plans d'ajustement comprend la détermination de la direction dans laquelle la plus forte variation des déplacements relatifs est trouvée.

4. Procédé selon l'une quelconque des revendications précédentes, comprenant en outre le calcul de différences entre des emplacements et les déplacements mesurés à partir d'une perspective centrique et des emplacements et les déplacements dans des coordonnées de laboratoire à partir des données de topographie de surface calculées, de l'orientation calculée du plan d'échantillon, et de la rotation calculée de l'échantillon.

5. Procédé selon la revendication 4, comprenant en outre une procédure itérative compensant des différences entre les emplacements et les déplacements mesurés à partir d'une perspective centrique et les emplacements et les déplacements dans des coordonnées de laboratoire sur la base des données de topographie de surface calculées, de l'orientation calculée du plan d'échantillon, et de la rotation calculée de l'échantillon.

6. Procédé selon l'une quelconque des revendications précédentes, dans lequel la détermination des jeux de déplacements est effectuée par une corrélation numérique d'images bidimensionnelles (DIC).

**7.** Procédé pour déterminer un jeu de données de topographie de surface tridimensionnelles quantitatives à partir d'une surface d'échantillon, comprenant :

le positionnement d'une surface d'échantillon dans un microscope dans une première position et l'obtention de données représentant une première image de cette surface d'échantillon ;

le positionnement de la surface d'échantillon dans le microscope dans une deuxième position inclinée par rapport à la première position et l'obtention de données représentant une deuxième image de cette surface d'échantillon ;

le positionnement de la surface d'échantillon dans le microscope dans une troisième position inclinée par rapport à la première position et l'obtention de données représentant une troisième image de cette surface d'échantillon ; et

un procédé selon l'une quelconque des revendications précédentes pour déterminer un jeu de données de topographie de surface tridimensionnelles quantitatives à partir desdites images.

**8.** Produit de type programme informatique sous une forme exécutable par ordinateur pour déterminer un jeu de données de topographie de surface tridimensionnelles quantitatives à partir d'images obtenues par microscopie, comprenant :

des instructions pour accéder à des données représentant au moins trois images obtenues par microscopie à partir d'une surface d'un échantillon dans un processeur de données, chaque image ayant été acquise à partir de la surface, la surface étant positionnée dans une orientation différente dans le microscope par rapport à un axe optique ou un axe de balayage central du microscope ;

des instructions déterminant au moins un premier jeu de déplacements de points correspondants entre une première image et une deuxième image, et un deuxième jeu de déplacements de points correspondants entre la première image et une troisième image ;

des instructions pour ajuster des composantes directionnelles dans deux directions dudit premier jeu de déplacements à deux plans d'ajustement respectifs, chacun desdits plans d'ajustement étant défini par des paramètres de ce plan d'ajustement respectif, et calculer, à partir desdites composantes directionnelles dans chacune desdites deux directions, les déplacements relatifs desdits points correspondants, chacun desdits déplacements relatifs indiquant une différence entre le déplacement de l'un desdits points correspondants et un déplacement calculé d'un point correspondant sur le plan d'ajustement respectif ;

des instructions pour ajuster des composantes directionnelles dans deux directions dudit deuxième jeu de déplacements à deux autres plans d'ajustement respectifs, chacun desdits autres plans d'ajustement étant défini par des paramètres de cet autre plan d'ajustement respectif, et calculer, à partir desdites composantes directionnelles dans chacune desdites deux directions, les déplacements relatifs desdits points correspondants, chacun desdits déplacements relatifs indiquant une différence entre le déplacement de l'un desdits points correspondants et un déplacement calculé d'un point correspondant sur l'autre plan d'ajustement respectif ;

des instructions pour calculer une orientation d'un plan d'échantillon pour chaque image et l'angle et l'axe de rotation du plan d'échantillon par rapport à l'axe de balayage central ou optique à partir des paramètres des plans d'ajustement en requérant que, pour au moins deux types de paramètres physiques, tels que l'orientation du plan d'échantillon dans la première image et les distances desdits points correspondants au plan d'échantillon, la valeur résultant dudit premier jeu de déplacements soit identique à la valeur résultant dudit deuxième jeu de déplacements ; et

des instructions pour calculer au moins un jeu de données de topographie de surface tridimensionnelles quantitatives à partir de l'orientation calculée du plan d'échantillon pour chaque image et l'angle et l'axe de rotation du plan d'échantillon et au moins lesdits premiers ou deuxièmes déplacements relatifs.

**9.** Produit de type programme informatique selon la revendication 8, stocké sur un support de stockage de données non transitoire.

FIG. 1

FIG. 2

EP 3 149 703 B1

FIG. 3

FIG. 4A

FIG. 4B

Case I

FIG. 5A

Case II

FIG. 5B

## Case III

FIG. 5C

FIG. 6A · FIG. 6B · FIG. 6C

## Case I

FIG. 7A

## Case II

FIG. 7B

## Case III

FIG. 7C

Case I

Case II

Case III

FIG. 8A

FIG. 8B

FIG. 8C

FIG. 9A

11.36 μm

FIG. 9B

FIG. 9C

FIG. 9D

FIG. 9E

FIG. 9F

FIG. 10A

FIG. 10B

FIG. 10C

FIG. 10D

# FIG.11

# FIG.11, cont'd

FIG. 12

FIG. 13A

FIG. 13B

FIG. 13C

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ZHU et al.** *Exp. Mech.,* 2011, vol. 51, 97
- **LI et al.** *Opt. Lasers Eng.,* 2012, vol. 50, 971
- **COP et al.** *Proceedings of the 10th International Conference on Pattern Recognition,* 1990, vol. 1, 733-737
- **B. PAN et al.** *Meas. Sci. Technol.,* 2009, vol. 20, 062001
- **I. HORCAS et al.** *Rev. Sci. Instrum.,* 2007, vol. 78, 013705